(19) Europäisches Patentamt
European Patent Office
Office européen des brevets

(11) EP 2 541 757 B1

(12) EUROPEAN PATENT SPECIFICATION

(45) Date of publication and mention
of the grant of the patent:
**16.11.2016 Bulletin 2016/46**

(51) Int Cl.:
**G05B 13/04** *(2006.01)*     **H02P 23/12** *(2006.01)*
**G05B 17/02** *(2006.01)*

(21) Application number: **11172047.0**

(22) Date of filing: **30.06.2011**

(54) **Control device and method for controlling an electric machine**

Steuervorrichtung und Verfahren zur Steuerung einer elektrischen Maschine

Dispositif de contrôle et procédé de contrôle d'une machine électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2013 Bulletin 2013/01**

(73) Proprietor: **ABB Schweiz AG**
**5400 Baden (CH)**

(72) Inventors:
• **Tenca, Pierluigi**
**16154 Genova (IT)**
• **Kanchan, Rahul**
**412202 Pin (IN)**

(74) Representative: **Savela, Reino Aleksi**
**ABB AB**
**Intellectual Property**
**Forskargränd 7**
**721 78 Västerås (SE)**

(56) References cited:
**DE-A1- 4 115 338**    **US-A1- 2004 079 173**

Remarks:
The file contains technical information submitted after the application was filed and not included in this specification

**Description**

**TECHNICAL FIELD OF THE INVENTION**

The present invention generally relates to the control of generic electric machines. Particularly, the invention relates to an improved control device and method for controlling an electric machine.

**DESCRIPTION OF RELATED ART AND BACKGROUND OF THE INVENTION**

Pseudo-linear machine models based on time-varying inductance matrix are theoretically correct only when the media, in which the electromagnetic field exists, can be assumed linear. Exclusively in such a case indeed, the n fluxes linked with each of the n windings are correctly expressible as linear combinations of the n currents in their whole domain. Any attempt to improve such models, aimed at incorporating the non-linear behavior, is theoretically not correct, even if it leads to acceptable quantitative results in some operating conditions. Such improved models can generate heavily mistaken results if one pretends to extend them beyond their usual scope of validity.

In substance, the correct modeling of electric machines, accounting also for magnetic non linearities and/or presence of permanent magnets, demands from the very beginning that the theoretical and procedural approach be radically different from the ones still widely used today, which represented the almost unique practicable way in absence of powerful computers.

DE4115338A1 discloses a control device capable of detecting and/or regulating position or angular velocity of a rotor of an electrical machine by using a Kalman filter.

**SUMMARY OF THE INVENTION**

It is an object of the present invention to provide a control device and a control method, respectively, for the control of an n-windings electric machine which overcome the limitations disclosed above.

It is a particular object of the invention to provide such device and such method, which are more accurate and precise than prior art devices and methods, and by which improved control of the electric machine can be obtained.

These objects, among others, are according to the present invention, attained by devices and methods as claimed in the appended claims.

According to a first aspect of the invention there is provided a control device in independent claims 1 and 2. Hereby an accurate and precise control of the electric machine is enabled, especially in presence of non-linear media. It shall be observed that the machine modeling means does not necessarily require any mathematical transformation on the physical quantities defining the domain of the state function. The modeling may thus be performed without such transformation.

In one embodiment, the machine modeling means is provided with a numerical model of the coenergy or energy associated with the electromagnetic field distribution inside the electric machine, and/or at least one partial derivative thereof. The numerical model is in tabular form, e.g. typically the selected output from FEM (Finite Element Method) simulations of the electric machine. Alternatively, it is obtained from numerical computation of an analytical function.

In another embodiment the machine modeling means is provided as an artificial intelligence model (e.g. based on neural networks and/or fuzzy systems) that describes the state function (e.g. coenergy or energy) associated with the electromagnetic field.

In a further embodiment, the control device comprises an input via which the aforementioned measured or estimated electrical and/or mechanical quantities of the electric machine are capable of being received and wherein the machine modeling means is provided to identify the coenergy or energy associated with the electromagnetic field distribution inside the electric machine, and/or a partial derivative thereof, based on the measured or estimated quantities of the electric machine. Typically, the measured or estimated quantities of the electric machine comprise at least one current in at least one of the $n$ windings and at least one voltage across at least one of the $n$ windings preferably as measured or estimated while the rotor of the electric machine is stationary in at least one selected angular position.

Other measurable quantities which can be used in the identification of the coenergy or energy associated with the electromagnetic field distribution inside the electric machine, and/or the partial derivative thereof, may comprise at least one electrical resistance of at least one of the $n$ windings, the mechanical torque at the shaft of the electric machine, and/or the total first order derivatives of at least one of the winding currents.

According to a second aspect of the invention there is provided a control method in independent claims 9 and 10.

Further characteristics of the invention and advantages thereof will be evident from the following detailed description of embodiments of the invention.

## BRIEF DESCRIPTION OF THE DRAWINGS

The present invention will become more fully understood from the detailed description of embodiments of the present invention given herein below and the accompanying Figs. 1-5, which are given by way of illustration only, and thus are not limitative of the present invention.

Fig. 1 displays schematically a control device for controlling an n-windings electric machine according to an embodiment of the invention.

Fig. 2 displays schematically a driver and an n-windings electric machine according to an embodiment of the invention.

Fig. 3 displays schematically a sensing winding embedded in a coil winding (upper left portion) and in radial cross section an electric machine with a rotor and a stator, both having coil windings and sensing windings embedded therein.

Figs. 4a-b display schematically two arrangements for measuring the torque of the electric machine at standstill, the arrangements being capable of fine controlling the shaft angle. The right hand portion of the respective Figure displays in a top view the arrangement mounted in the electric machine whereas the left hand portion of the respective Figure is a cross section taken along line A-A of the top view.

Fig. 5 displays schematically an arrangement for measuring total current derivatives of the currents in the power connections from a driver to the electric machine. The arrangement features sensing coils in series with, or arranged around, the power connections to the electric machine.

## DETAILED DESCRIPTION OF EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known techniques are omitted so as not to obscure the description of the present invention with unnecessary details.

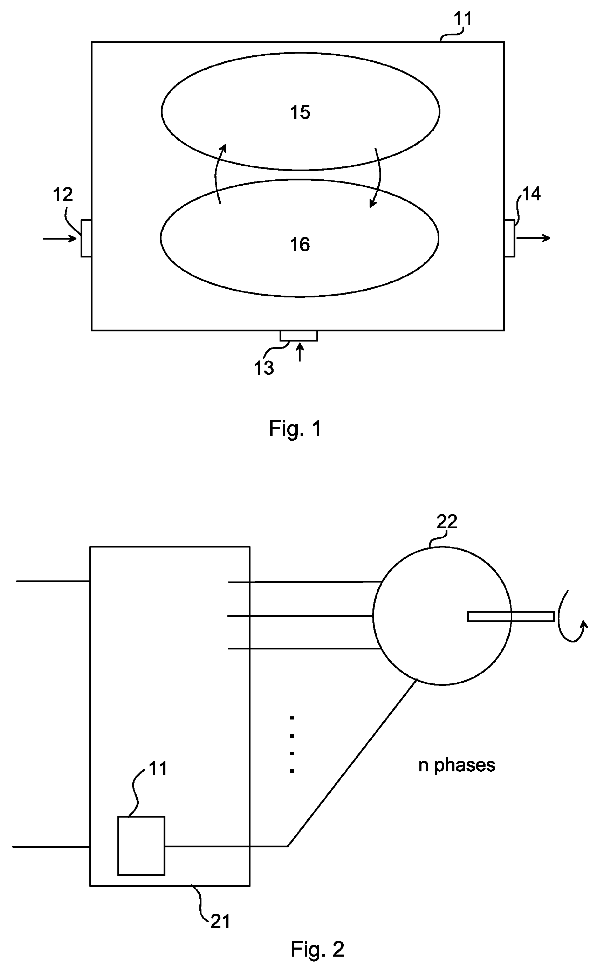

A real-time controller or control device 11 for controlling an *n*-windings electric machine according to an embodiment of the invention is displayed schematically in Fig. 1. The electric machine has *ks* windings on the stator and *kr* windings on the rotor wherein *ks* + *kr* = *n* and wherein either one of *ks* and *kr* may be zero. The control device 11 comprises an input 12 via which control commands are capable of being received, optionally an input 13 via which measured or estimated quantities of the electric machine are capable of being received, and an output 14 via which control commands to a driver of the electric machine are capable of being output. The control device further comprises machine modeling means 15 and decision means 16, preferably provided as a microcomputer device provided with suitable software.

Fig. 2 displays schematically a driver 21, e.g. a variable speed drive (VSD) system, in which the control device 11 may be arranged. The driver 21 is operatively connected to an *n*-windings electric machine 22 for driving the same.

The machine modeling means 15 of the control device 11 is provided for modeling the behavior of the electric machine 22 by using a model based on a state function associated with the electromagnetic field distribution inside the electric machine 22, and/or based on at least one of its partial derivatives.

The state function may be the energy, but is more comfortably the coenergy associated with the electromagnetic field distribution inside the electric machine 22, or partial derivatives thereof. The decision means 16 is operatively connected to the inputs 12, 13, to the output 14, and to the machine modeling means 15 and is provided for determining the control commands, and/or on measured or estimated quantities 13, to be output to the electric machine 22 at the output 14 based on input control commands and results from the modeling of the behavior of the electric machine as performed by the machine modeling means 15. Subsequently, the decision means outputs determined control commands at the output 14. The modeling means may be connected directly to the inputs 12, 13 and the output 14.

The coenergy-based model of the electric machine 22, characterized by one moving part (the "rotor") rotating around an axis can be described by the following equation system:

$$\begin{cases} \frac{d}{dt}\left(\frac{\partial Wco(\bar{i}(t)\,,\,\theta_m(t))}{\partial i_j}\right) = v_j(t) - r_j \cdot i_j(t) \\ \underbrace{\qquad\qquad\qquad\qquad}_{\text{Flux } \lambda_j(\bar{i}(t)\,,\,\theta_m(t))} \\[2em] \underbrace{\frac{\partial Wco(\bar{i}(t)\,,\,\theta_m(t))}{\partial \theta_m}}_{\text{Torque } Tem(\bar{i}(t)\,,\,\theta_m(t))} + T_l(t) = J \cdot \frac{d\omega_m(t)}{dt} \end{cases}$$

wherein the first equation of the system is provided in a plurality, expressed by the natural index $j$, corresponding to the number $n$ of windings. The index $j$ ranges from 1 to $n$, and the symbols present in the equations are identified as follows:

| | |
|---|---|
| $\theta_m$ | Scalar value of the angular position of the rotor |
| $\omega_m$ | Scalar value of the rotational speed of the rotor around its axis assumed stationary in an inertial reference frame |
| $i$ | Vector of the n winding currents. |
| $v_i\ i_j$ if | Voltage and current of the $j^{th}$ winding (a two-terminal network) $j \in \{1..n\}$. They are referred to the users' convention with the current reference direction entering the winding terminal. |
| $J$ | Equivalent total moment of inertia of the rotating masses. It is referred to the rotor axis of rotation. (C) |
| $r_j$ | Resistance of the $j^{th}$ winding (C). $j \in \{1..n\}$. |
| $Wco(\bar{i},\theta_m)$ | Coenergy of the electromagnetic field in the overall machine space, expressed as state function of the winding currents and angular position of the rotor |
| $vj,\ i_j$ | Voltage and current of the $j^{th}$ winding (a two-terminal network) $j \in \{1..n\}$. They are referred to the users convention with the current reference direction entering the winding terminal. |
| $T_l$ | Scalar value of the torque exerted by the mechanical system coupled to the electrical machine. It is referred to the rotor axis of rotation |

By trivial manipulation the equation system above can be rewritten in the form shown below:

$$\begin{cases} \sum_{k=1}^{n}\left\{\left[\frac{\partial^2 Wco(\bar{i}(t),\theta_m(t))}{\partial i_j \partial i_k}\right] \cdot \frac{di_k(t)}{dt}\right\} + \frac{\partial^2 Wco(\bar{i}(t),\theta_m(t))}{\partial i_j \partial \theta_m} \cdot \omega_m(t) = v_j(t) - r_j \cdot i_j(t) \\[1.5em] J \cdot \frac{d\omega_m(t)}{dt} = \frac{\partial Wco(\bar{i}(t),\theta_m(t))}{\partial \theta_m} + T_l(t) \\[1.5em] \frac{d\theta_m(t)}{dt} = \omega_m(t) \end{cases}$$

wherein the first equation of the system is provided in a plurality, expressed by the natural index $j$, corresponding to the number $n$ of windings and the symbols of the equations are identified as above.

By observing the above equations it can be noted that once suitable partial derivatives of the coenergy are known, the model for control purposes is completely defined and computable. The iron losses are not comprised, but can be modeled separately.

The machine modeling means can be provided with the coenergy partial derivatives either numerically in tabular form or in a discretized form of an analytical function or an artificial intelligence descriptor, preferably consisting of a set of artificial neural networks and/or fuzzy inferences.

. The partial derivatives can also by definition be calculated from the coenergy state function, if this is known with sufficient accuracy for numerical differentiation. If the coenergy is known analytically, the partial derivatives are derived by analytical differentiation. If the coenergy is known in tabular form, a sufficient number of points are needed to limit the numerical error affecting the numerical differentiation techniques that can be employed. It should be highlighted that the computation of the coenergy or the energy is a standard feature in almost all FEM simulators today. For a specific machine design it is therefore procedurally straightforward to obtain the coenergy function in a tabular form for a chosen set of currents and angle values.

The models of any electromechanical converter which are based on state functions (energy or coenergy) associated with the electromagnetic field distribution have always been recognized as the only correct ones, especially in presence of non-linear media. Their adoption has always been impractical in the past because of the lack of computational power, both for what concerns the machine design and machine control aspects, as well as for what it concerns the instrumentation, which was incapable of intense and complex data acquisition and post-processing. Conversely nowadays, the availability of inexpensive fast computers, even inside the real-time controllers and the instrumentation, enables the machine analysis and control to the aforementioned correct fundamental models based on state functions, most comfortably the coenergy.

The modeling approach has the advantage of stemming from the unified vision of the electromechanical conversion, since; ultimately, only one electric machine exists. The approach is valid for all different types of electric machines. It is therefore suitable for a standardization of treatments, both in design/simulation and control, with consequent cost reductions brought by the possible uniformation of analysis and control platforms.

If the coenergy function is not known analytically or through simulations, the machine modeling means 15 can be provided to identify the coenergy associated with the electromagnetic field distribution inside the electric machine 22 based on the measured or estimated quantities of the electric machine 22 as received via the input 13 of the control device 11.

It shall also be appreciated that even if the coenergy function is known analytically or through simulations this estimated coenergy function may differ from how the electric machine actually behaves. In such instance, measured or estimated quantities of the electric machine 22 as received via the input 13 of the control device 11 may be used to enhance the already existing coenergy model of the electric machine.

Any method of such machine identification, especially if based on state functions, strongly benefits from a good knowledge of the fluxes linked with the machine windings. Such fluxes in principle can either be directly measured with sensors sensible to the magnetic field or indirectly obtained by integration of the voltages induced in them. This latter approach is still the technologically simpler nowadays, but it is also prone to errors that the following proposed aspect of the invention is meant to reduce.

If all windings are accessible the coenergy can be determined based on currents in the $n$ windings and voltages across the $n$ windings as measured while the rotor of the electric machine is stationary in a selected angular position, see Equation 3.2 in the attached Appendix below.

A main obstacle in good flux determination through time integration of voltages is the necessary knowledge of the winding resistances and their variations which must be continuously tracked for maintaining an acceptable accuracy. In order to overcome this limitation, especially for more valuable high-power machines and processes, it is proposed the addition of small "sensing" windings in the electric machine; windings disposed in such a way that each of them follows as much as possible the geometrical path of the normal "power" winding to which it is associated. If such a condition is satisfied the sensing winding is subject to a field distribution almost identical to the one of the corresponding power winding. As a consequence the voltage induced in the sensing winding, and the flux linked with it, are proportional, with very good approximation, to the voltage induced in the power winding and its linked flux, respectively. The factor of proportionality is clearly the ratio among the number of turns in the sensing and power windings. If the field is sufficiently intense the sensing winding could be realized very simply by one single turn of wire disposed along the path of the associated power winding.

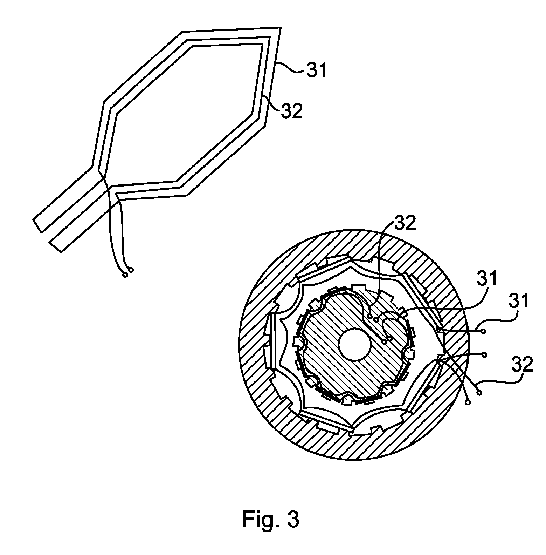

Although different arrangements of this principle are possible, a possible one is to embed a sensing coil - made of very thin wire with proper voltage insulation level - inside each coil composing the power winding as being illustrated in Fig. 3. The sensing wire 32 can be embedded during the wrapping of the coil insulation layers so that each coil 31 receives two additional terminals which belong to the sensing winding 32. As being illustrated in the upper left portion of Fig. 3. Afterwards, when the coils are connected properly to compose a winding, their respective sensing wires are connected in the same order thereby realizing straightforwardly the sensing winding, which develops itself all along the "curve" of the power winding, as can be seen in the lower right portion of Fig. 3, in which the coil windings 31 and the sensing windings 32 are visible both on the rotor and on the stator of the electric machine.

All terminals of the sensing windings are then concentrated into a separate terminal box of the electric machine, where the voltages can be measured and sent to the drive controller, or even amplified and integrated locally if necessary or requested by the customer. Clearly these voltages truly reflect the total time derivative of the magnetic fluxes linked with the power windings only, without any undesired component due to the resistive drop that is therefore rendered completely uninfluenced. There is no longer any need of tracking or even knowing the resistances of the power windings.

An electric machine with these sensing windings can be offered to the customer as an enhanced version for more performing control and/or diagnostic. The additional manufacturing cost is limited but the additional value for the customer and drive manufacturer can be significant. As mentioned previously, the integration of the voltages could be performed even locally, in the terminal box of the sensing windings, similarly to what is done by the integrating amplifiers present in the current sensors based on Rogowski coils. Electric machines can therefore be manufactured that already provide either the signals proportional to the important fluxes above a certain speed (i.e. the already integrated sensed voltages), or the sensed voltages only, leaving in this case the integration to a separate purchasable set of amplifiers designed for this purpose.

It can be observed that it is not necessary to equip all power windings with an associated sensing winding. One can limit itself to the minimum number of sensing windings which are necessary for the machine identification or sensorless control, as described in detail in the Appendix below.

In order to adhere to a common commissioning requirement, it has been chosen to identify the coenergy-based model of the electric machine, for what is possible, keeping the rotor locked at standstill. This locking is realized by suitable mechanical means.

If all windings of the machine have observable currents, the coenergy can be determined with measurements at the electrical terminals only through the Equation 3.2 of the attached Appendix below.

The details are described in section 3.1 and the steps in 3.1.1. More accurate measurement of the coenergy or identification of the input-output mapping caused by it - sufficient for electric machines with non observable windings - demand the measurement of the electromagnetic torque at standstill and at different shaft angles imposed during the procedure.

Since the torque is measured at standstill the use of an expensive torsiometer - aimed at measuring the torque during rotation - is not necessary. A more accurate measurement technique can use load cells (usually more accurate than a torsiometer) and a sufficiently stiff mechanical arrangement that connects them to the machine base while allowing the imposition of the desired angle.

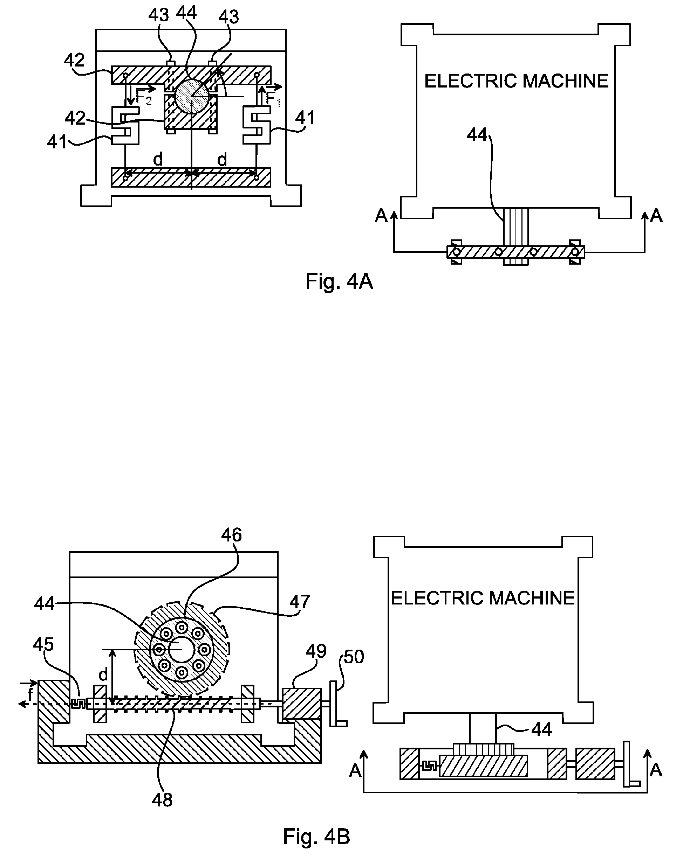

One arrangement, illustrated in Fig. 4a, comprises two load cells 41 connected to a yoke 42 arranged around the shaft 44 in a friction-based coupling which is tightened by means of bolts 43 once the desired angle is imposed. This solution is suitable for shafts 44 already coupled to the load machinery, without possibility of being disconnected. In the other end the load cells 41 are connected to a fixed support connected to the base of the electric machine.

An alternative arrangement uses a yoke or leverage tightened to the machine shaft as above, but held steady by one (or two) hydraulic ("oleodynamic") pistons instead of load cells. The force can be transmitted by the hydraulic oil in the pressure pipes to a remote and more comfortable location where another receiving piston acts on one load cell. This is a much more flexible solution for the logistic and mounting, but care must be put in assuring that the deformation of the pipes and the compressibility of the hydraulic oil does not introduce excessive systematic errors in the measurement.

A yet alternative arrangement, illustrated in Fig. 4b, is coupled to the flange of one free side of the machine shaft 44, when available. Such a solution is the most comfortable from the operational point of view. It uses a worm-thread coupling whose pinion 46 is connected to the shaft 44. The pinion 46 has a helicoidal profile 47 which is brought into engagement with a thread 48, thereby converting the torque into an axial load which can be sensed by a load cell 45 connected axially between an end of the thread 48 and a fixed support of the electric machine. The pinion 46 could possibly be machined onto the machine shaft 44 itself, if the nominal torque to be withstood is not excessive. Because of the non reciprocity of the worm-thread coupling (provided that the thread angle is below a certain value), the arrangement is self-blocking for movements originating inside the machine. Conversely, the shaft can be easily and very precisely rotated by acting on the thread, either automatically via a servomotor 49 that allows also an automation of the identification procedure, or manually via a handle 50.

All apparatuses are removed at the end of the identification procedure.

The coenergy, like the energy, is a state function of the electromechanical system; therefore its value depends only on the point defined by its arguments, and not on the trajectory followed to reach that point. One can exploit this property to determine the coenergy more accurately through the following procedural choices, described more extensively in the attached Appendix:

- The electrical sources (VSDs or others) are connected to the machine winding and controlled so that they behave as current sources with DC waveforms in steady state.

- The desired set of winding current values (one "point") is reached by varying linearly one current at the time, never two simultaneously. The other currents are kept at their preceding constant value while the selected one is varied. During these controlled transients the voltages and currents in all windings are recorded. With such recordings the coenergy value is updated through the Equation 3.2 of the attached Appendix.

- The measured values of the winding resistances are updated only when all currents are constants because in such time intervals all winding voltages are composed by the resistive components only. Before performing the ratio between the measured voltages and currents, the measurements are averaged for a sufficiently long time in order to eliminate the systematic errors caused by the noise and unavoidable ripple presence, both characterized by zero average value.

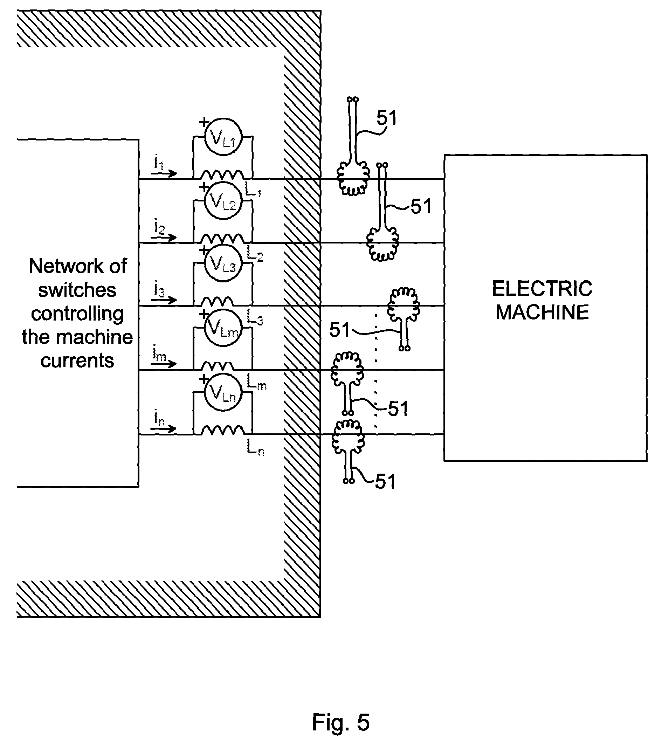

During the linear variation of one winding current only - while the others are kept constant - an even more direct determination of important partial derivatives of the coenergy can be performed. Such derivatives would constitute the elements of the matrix of inductances in case the machine was perfectly magnetically linear. This possibility encourages the direct measurement, in an analogical way, of the current derivatives. It is possible to do this with limited cost increase by inserting small calibrated inductances in series to each line connecting the drive to the machine as being illustrated in Fig. 5. The measurement of the voltage across such inductances is clearly proportional to the current derivative. An alternative, also shown in Fig. 5, employs sensing coils 51 (without integrating amplifier), e.g. Rogowski coils, mounted around the conductors. Rogowski coils without amplifiers are easily available as standard components ready to be purchased.

This latter solution has also the great advantage of being applicable to already existing converters - potentially under refurbishing or revamping - without the need of modifying their construction, as it would be the case when series inductances were used. Such converter might receive a new control device which incorporates the sensing of the Rogowski voltages, thereby increasing their capabilities and customer value at little additional cost in the revamping process.

Also the sensorless determination of the speed is improved by measuring the current derivatives directly. This is an additional reason for providing the VSD system with this capability.

It shall be noted that the present invention is not limited to a control device, but encompasses as well a driver, such as the driver 21 of Fig. 2, for an n-windings electric machine comprising the inventive control device.

Yet further, the invention also encompasses an n-windings electric machine 22, such as the electric machine 22 of Fig. 2, provided with a driver comprising the inventive control device.

Still further, the invention encompasses a control method for operating an inventive control device. Such method may comprise any of the method steps, procedure steps, or process steps as disclosed herein.

It will be obvious that the invention may be varied in a plurality of ways. Such variations are not to be regarded as a departure from the scope of the invention. All such modifications as would be obvious to one skilled in the art are intended to be included within the scope of the appended claims. Particularly, it shall be appreciated that the various features and limitations depicted herein can be used separately or can be combined in each possible manner to obtain different embodiments of the invention.

Attached hereto is an Appendix discussing in detail the concept of the coenergy model and the identification thereof based on experimental measurements. The Appendix is an integral part of the Detailed description of embodiments.

**APPENDIX**

The present analysis addresses the computation, use and experimental identification of a generic model based on the coenergy of the electromagnetic field as state function, therefore valid for all types of $n$-windings electrical machines. In the framework of the study, additions to the machines and drives capable of improving the control performances and identification accuracies are also mentioned. Their validity is independent from the type of model adopted. Necessary conditions to be satisfied for full identification and sensorless operation of machines with non-observable winding currents are also derived.

Since the systematization of the classical electrodynamics at the beginning of the 20th century, the description of an electromechanical converter by state functions (energy or coenergy) is established and recognized as the only correct one, especially in presence of non-linear media. The pseudo-linear models flourished in the history of the studies about electrical machines constituted the only objective possibility, due to the lack of computational power, both in design and, until recently, also in control. Conversely nowadays, the availability of inexpensive fast computers, even inside the real-time controllers, begins to show the potential for a radical change of approach, thereby possibly reverting the machine analysis and control to the aforementioned correct fundamental models. The pseudo-linear models indeed have partial validity and their inherent oversimplification is often cumbersome to adapt to the observed experimental behaviour, as well as to the modern modelling and performance needs. In any case they are theoretically wrong and potential sources of erroneous results in highly non-linear operation, which is more and more common nowadays. Such fundamentally limited models are still most used owing to the strong influence and historical cultural conditioning they still exert. Because of this influence the presently available computational power is still often used in the attempt to extend their validity through complex artifices. This same considerable effort, presently devoted to adapt such intrinsically flawed models, could be channeled more fruitfully in the near future towards computing the truly correct models based on state functions.

*NOTE:*

*The page, section, chapter and literature reference numbers explicitly cited in the text of this appendix refer to its content only, not to the numerations of the overall patent application of which the appendix is an integral part*

TABLE OF CONTENTS

| | | | |
|---|---|---|---|
| **1** | **INTRODUCTION** | | **3** |
| | 1.1 | PURPOSE | 3 |
| | 1.2 | SCOPE | 3 |
| | 1.3 | DEFINITIONS | 3 |
| | | 1.3.1 LIST OF MOST IMPORTANT ACRONYMS | 3 |
| | | 1.3.2 LIST OF MOST IMPORTANT SYMBOLS | 4 |
| | 1.4 | STRUCTURE | 5 |
| **2** | **GENERAL MODEL FOR ELECTRICAL MACHINES AND ITS COMPUTATION** | | **6** |
| | 2.1 | A GENERAL MODEL OF ELECTRICAL MACHINES BASED ON STATE FUNCTIONS | 6 |
| | 2.2 | SIMULATION OF THE COENERGY MODEL AND ITS DERIVATION FROM FEM COMPUTATIONS | 7 |
| | 2.3 | SUITABILITY OF THE COENERGY-BASED MODELS WITH MODERN COMPUTERS | 9 |
| | 2.4 | DERIVATION OF THE COENERGY MODEL FROM THE CLASSICAL ONES AND VICEVERSA | 10 |
| | 2.5 | SENSORLESS OPERATION AND A NECESSARY CONDITION FOR IT AS SEEN FROM THE COENERGY-BASED MODEL | 11 |
| | | 2.5.1 ASSUMPTIONS OF SYMMETRY MAY IMPAIR THE SENSORLESS CAPABILITIES | 13 |
| | 2.6 | THE TORQUE KERNEL | 14 |
| **3** | **IDENTIFICATION OF THE MODEL VIA EXPERIMENTAL MEASUREMENTS** | | **16** |
| | 3.1 | MODEL IDENTIFICATION WHEN ALL WINDINGS ARE ACCESSIBLE | 16 |
| | | 3.1.1 IDENTIFICATION, AND ITS LIMITS, THROUGH MEASUREMENTS AT THE ELECTRICAL PORTS ONLY | 16 |
| | | 3.1.1.1 IMPROVED CONTROL AND IDENTIFICATION ACCURACY THROUGH SENSING WINDINGS | 19 |
| | | 3.1.1.2 MACHINES WITH NON ZERO FLUX AND COENERGY AT ZERO CURRENTS. THE NECESSITY OF MECHANICAL MEASUREMENTS | 19 |
| | | 3.1.1.3 PARTIAL DERIVATIVES OF THE COENERGY THROUGH PARAMETRIC INTERPOLATION AND POSSIBLE INDIRECT MEASUREMENT | 20 |
| | | 3.1.2 IMPROVED ACCURACY VIA MEASUREMENTS AT BOTH ELECTRICAL AND MECHANICAL PORTS | 22 |
| | 3.2 | IDENTIFICATION OF MACHINES WITH SOME NON-OBSERVABLE WINDINGS | 23 |
| | | 3.2.1 IDENTIFICATION METHOD OF THE INPUT-OUTPUT MAPPING | 24 |
| | 3.3 | IDENTIFICATION OF THE TORQUE KERNEL | 25 |
| **4** | **CONCLUSIONS** | | **26** |
| **5** | **REFERENCES** | | **27** |
| | **NOTES FROM ALL CHAPTERS** | | **29** |

**1 INTRODUCTION**

**1.1 Purpose**

The analysis summarized by this document addresses the computation, use and experimental identification of a generic model based on the coenergy of the electromagnetic field as state function, therefore valid for all types of *n*-windings electrical machines. In the framework of the study, additions to the machines and drives capable of improving the control performances and identification accuracies are also mentioned. Their validity is independent from the type of model adopted. Necessary conditions to be satisfied for full identification and sensorless operation of machines with non-observable winding currents are also derived.

The model which is aim of the analysis and subject of this document is devoted to the dynamical analysis and control of the machine only. The model is not suitable for the detailed computation of the losses in the machine, especially those in the magnetic media. In principle, this is a completely separate problem that usually demands for substantially different approaches first and foremost focused on the faithful modelling of the materials.

The losses have clearly an influence on the dynamic and control behaviour of an electrical machine. This influence diminishes with the increase of the power rating of the machine but, in any case, this fact does not imply that the two aspects must, and can, be properly addressed with a single type of model.

### 1.2 Scope

The investigations performed contribute to answer the following questions throughout the text of the document:

1. Which model based on state functions is suitable for a generic electrical machine with $n$ windings for what concerns its simulation, real-time control and identification at the terminals via measurements ?

2. To what extent the model can be identified with proper use of electrical sources usually constituted by the inverters of VSD drives ?

3. Which suitable measurement methodology to identify the model with proper accuracy ?

4. Under imposed test constraints (like zero speed) which parts of the model and machine types are more easily identifiable ?

5. Which modifications and/or additions in the machines and drives can improve the machine identification and VSD control ?

### 1.3 Definitions

#### 1.3.1 List of Most Important Acronyms

The following acronyms are used throughout the document

**ACRONYM TERMINOLOGY**

FEM      Finite **E**lement **M**ethod

PM      **P**ermanent **M**agnet(s)

LHS      Left **H**and **S**ide of an equation

RHS      Right **H**and **S**ide of an equation

PWM      **P**ulse **W**idth **M**odulation

#### 1.3.2 List of Most Important Symbols

Unless stated otherwise, the listed quantities are assumed to be real-valued functions of time. The time dependance can be explicit, or implicit if the functions are composed. The constant quantities are denoted by "(C)". Where the symbol of summation is not explicitly used, the tensorial notation indicating summation over repeated indexes [1] is used throughout the whole document for sake of compactness and clarity of the expressions.

| SYMBOL | ASSOCIATED SIGNIFICANCE | MEAS. UNIT |
|---|---|---|
| $n$ | Total number of windings in the electrical machine (C). $n \in$ N - {0} | *adimensional* |
| $n_s$ | Number of windings located on the stator of the electrical machine (C). $n_s \in$ N, $n_s \le n$ | *adimensional* |
| $n_r$ | Number of windings located on the rotor of the electrical machine (C). $n_r = n - n_s$ | *adimensional* |
| $n_{NO}$ | Number of windings whose currents are not observed. $n_{NO}$ *and* $n_r$ are totally uncorrelated in general. | *adimensional* |
| $\delta_{jk}$ | Kronecker's delta. $\delta_{ik}$ = 1 for $j = k$ , 0 otherwise | *adimensional* |
| $\theta_m$ | Scalar value of the angular position of the rotor | *[rad]* |
| $\omega_m$ | Scalar value of the rotational speed of the rotor around its axis assumed stationary in an inertial reference frame | *[rad/s]* |
| $i$ | Vector of the $n$ winding currents. | *[A]* |
| $\overline{i_{NO}}$ | Vector of the $n_{NO}$ non observable winding currents. | *[A]* |
| $\overline{i_O}$ | Vector of the $it - n_{NO}$ observable winding currents. | *[A]* |
| $\overline{\lambda}$ | Vector of the $n$ fluxes linked with the $n$ windings. | *[Wb]* |
| $\overline{\lambda_{NO}}$ | Vector of the $n_{NO}$ fluxes linked with the windings whose currents are not observable. | *[Wb]* |
| $\overline{\lambda_O}$ | Vector of the $n - n_{NO}$ fluxes linked with windings whose currents are observable. | *[Wb]* |
| $Tem(\overline{i}, \theta_m)$ | Scalar product of the electromagnetic torque (a vector in general) of the motor with the versor of the reference direction chosen along the rotor axis of rotation. It is a function of the winding currents and angular position of the rotor. The reference directions for the here coaxial vectors $\overline{Tem}$ and $\overline{\omega_m}$, are such that the mechanical power $\overline{Tem}\,\overline{\omega_m}$ is positive when exiting the electrical machine. | *[N ·m]* |
| $T_l$ | Scalar value of the torque exerted by the mechanical system coupled to the electrical machine. It is referred to the rotor axis of rotation | *[N m]* |
| $J$ | Equivalent total moment of inertia of the rotating masses. It is referred to the rotor axis of rotation. (C) | *[kg · m²]* |
| rj | Resistance of the $j^{th}$ winding *(C).* $j \in \{1..n\}$. | *[Ω]* |
| We($\overline{\lambda}, \theta_m$) | Energy of the electromagnetic field in the overall machine space, expressed as state function of the winding fluxes and angular position of the rotor | *[J]* |
| $Wco(i, _{8m})$ | Coenergy of the electromagnetic field in the overall machine space, expressed as state function of the winding currents and angular position of the rotor | *[J]* |
| $L_{ik}(_{8m})$ | Mutual inductance between *the j - th* and *k - th* windings under the assumption of linear *media.* $j$ , $k \in \{1..n\}$. For $j = k$ the quantity represents the self-inductance. Clearly $L_{jk}(\theta_m)$ $= L_{k_j}(\theta_m)\ \forall j,\ k \in \{1..n\}$ | *[H]* |
| $v_j, i_j$ | Voltage and current of the $j^{th}$ winding (a two-terminal network) j $\in \{1..n\}$. They are referred to the users' convention with the current reference direction entering the winding terminal. | *[V], [A]* |

**1.4 Structure**

This document can be subdivided in the following parts:

- Chapter 1 defines the aim of the document and lists the most important definitions.

- Chapter 2 describes the model for a generic *n*-windings electrical machine, how it can be obtained numerically by FEM computations and how it must be used to simulate the machine. General considerations about sensorless operation are mentioned and necessary conditions for such capability are formulated.

- Chapter 3 investigates how, and up to which extent, the generic model can be experimentally identified by measurements at the machine terminals (mechanical and electrical). This under the constraint of rotor at standstill. The important special case of machines having non-observable winding currents is discussed.

## 2 GENERAL MODEL FOR ELECTRICAL MACHINES AND ITS COMPUTATION

### 2.1 A general model of electrical machines based on state functions

The parts composing the electrical machine are assumed to be rigid bodies. It is further assumed that one of them can move in an inertial reference frame, with one single degree of freedom, whereas the other is stationary in such an inertial reference frame. As a consequence the mechanical state of the electrical machine is fully described by the single mechanical free coordinate and its first total time derivative.

In case the electrical machine is a rotating one, the moving part is constituted by the rotor. The free coordinate and its first total time derivative are the rotor angular position $\theta_m$ and angular speed $\omega_m$ respectively. When the electrical machine is a linear one, the free coordinate and its first total time derivative are the abscissa and linear speed respectively, both defined along the trajectory curve in the space. These assumptions describe the vast majority of the existing electrical machines and exclude the explicit dependance of the machine state-function model on the speed as explicit independent variable. Such a dependence should be considered if the machine parts were non-rigid bodies, a case demanding the introduction of at least one additional free coordinate.

Broad literature, even since the systematization of the classical electrodynamics in the first years of the 20th century [2, 3] and more recent one [4], [5], [6], [7] highlights that the only universally correct description of a generic lumped electromechanical system is based on the Lagrangian formulation involving the energy, or coenergy, (virtual work principle) definable in the volume occupied by the machine. The only hypotheses posed on the electromechanical system are its lumped character and its single-valued state functions[1]. Within these assumptions the description remains valid for all cases of nonlinearities, asymmetries and presence of permanent magnets [8], [9], [10]. These could be also reduced to an electrical model by introducing additional fictitious windings characterized by non observable currents, but such a formulation is usually not advantageous for the analyses.

Conversely, machine models based on the time-varying matrix of non-linear inductances are theoretically correct only when the media can be assumed linear. Exclusively in such a case indeed, the $n$ fluxes linked with each of the $n$ windings are correctly expressible as linear combinations of the $n$ currents in their whole domain. Any attempt to improve such models, aimed at incorporating the non-linear behaviour, is theoretically not correct, even if it leads to acceptable quantitative results in some operating conditions. Such "improved models" can generate heavily mistaken results if one pretends to extend them beyond their usual "local" character.

In substance, the correct modelling of electrical machines, accounting for magnetic non linearities and/or presence of permanent magnets, demands from the very beginning that the theoretical and procedural methodology be radically different from the ones still widely used today. These anyway, objectively constituted almost the only practicable approaches in absence of powerful computers.

The unique case where the formulation based on a non-linear time-varying inductance is theoretical correct, concerns one single winding in absence of permanent magnets. In a such a case indeed - and when the winding current is non zero - one can always express the flux linked with the single winding as product of the single current and one current-dependent factor which assumes the role of the varying inductance. The description of non-linearities in electrical machines through models based on non-linear inductances are numerous (e.g. [11]) but the rigorous literature always highlights that such inductances have "incremental" (local) character and are valid for a biasing point $\overline{i_\gamma^*}$ only; a point around which the $n$ winding currents undergo "small-signal" variations.

This limitation is straightforwardly deducible simply by observing the first-order Taylor's approximation of the flux of each winding considered a function of the $n$ currents and $\theta_m$. Such a linearization around a biasing point $\overline{i_\gamma^*}$ consists of one constant term to which the scalar product of the flux gradient in that point and the vector of the current variations is added. One infers immediately that the "incremental" inductances recognizable in such an expression are exactly the elements composing the flux gradient vector, which, by its definition, depends on the biasing point.

The expression of the forces, torques, fluxes and voltages from the coenergy is a method already commonly used, and considered the only proper one, in the analysis of switched, and some synchronous, reluctance machines whose behaviour cannot neglect the nonlinearity of the magnetic media [12], [13], [14], [15],[8], [16]. General torque estimators based on the machine coenergy only, have already been proposed [17] after recognizing that a sufficiently accurate knowledge of the coenergy is the comprehensive information about the machine behaviour for control purposes. Recent works have attempted the use of the coenergy also to solid-rotor induction machines [18] and the coenergy is commonly used to investigate radial forces due to eccentricity in classical squirrel-cage induction machines.

It is very important to remark that both energy and coenergy are state functions which do not depend on the mechanical speed but only on the mechanical position of the moving part. The positions of the moving bodies (e.g. "the rotor"), not their speeds are the most important mechanical quantities to be determined in any electrical machine, either by direct measurement or by sufficiently accurate estimation.

The coenergy expressed via winding currents and angular position as independent variables is the most practical form for such state function which, nowadays, is also an easily and rapidly obtainable quantity from several FEM simulators, once they have computed the vectors $\overrightarrow{\mathbf{B}}$ and $\overrightarrow{\mathbf{H}}$ [19], [20], [2].

The system of ordinary differential equations describing a generic electromechanical system whose coenergy is known can be summarized by Eq. 2.1 at page 7 [2]. The symbols appearing in it have been defined in section 1.3.2.

$$
\begin{cases}
\frac{d}{dt}\underbrace{\left(\frac{\partial Wco(\bar{i}(t)\,,\,\theta_m(t))}{\partial i_j}\right)}_{\text{Flux }\lambda_j(\bar{i}(t)\,,\,\theta_m(t))} = v_j(t) - r_j \cdot i_j(t) \\[2em]
\underbrace{\frac{\partial Wco(\bar{i}(t)\,,\,\theta_m(t))}{\partial \theta_m}}_{\text{Torque }Tem(\bar{i}(t)\,,\,\theta_m(t))} + T_l(t) = J \cdot \frac{d\omega_m(t)}{dt}
\end{cases}
\tag{2.1}
$$

One could also use the energy as state function with which to write a system similar to Eq. 2.1 [2] but this choice would firstly require to express the energy as function of the $n$ fluxes and $\theta_m$ as independent variables. Although possible, this path is procedurally more indirect and more cumbersome, both for the usual methods at the basis of the FEM computations and for the use of the model, as well as for the experimental identification. The direct calculation of $\frac{\partial Wco(\bar{i},\theta_m)}{\partial \theta_m}$ by FEM methods, without computing the partial derivative of the coenergy by finite differences a posteriori, has been attempted in [8].

## 2.2 Simulation of the coenergy model and its derivation from FEM computations

The arguments of the total time derivative in the $n$ electrical equations present in Eq. 2.1 are the total fluxes linked with each one of the $n$ windings. In turn, such fluxes are clearly functions of the $n$ currents and $\theta_m$ too. It descends that the $n$ electrical equations can be expanded in the form reported in Eq. 2.2 at page 8 where the first total derivatives of all state variables $\{\ \bar{i}_\gamma\ ,\ \omega_t,\ \theta_m\ \}$ can be easily rendered explicit, through trivial manipulations, in all points where the Hessian of the coenergy is non singular.

$$
\begin{cases}
\sum_{k=1}^{n}\left\{\left[\frac{\partial^2 Wco(\bar{i}(t)\,,\,\theta_m(t))}{\partial i_j \partial i_k}\right]\cdot\frac{di_k(t)}{dt}\right\} + \frac{\partial^2 Wco(\bar{i}(t)\,,\,\theta_m(t))}{\partial i_j \partial \theta_m}\cdot\omega_m(t) = v_j(t) - r_j \cdot i_j(t) \\[1.5em]
J\cdot\frac{d\omega_m(t)}{dt} = \frac{\partial Wco(\bar{i}(t)\,,\,\theta_m(t))}{\partial \theta_m} + T_l(t) \\[1.5em]
\frac{d\theta_m(t)}{dt} = \omega_m(t)
\end{cases}
\tag{2.2}
$$

It can be observed that $Wco(\bar{i},\theta_m)$ $\frac{\partial Wco(\bar{i},\theta_m)}{\partial i_j}$, $\frac{\partial^2 Wco(\bar{i},\theta_m)}{\partial i_j \partial i_k}$ are continuous for all real electromechanical systems. Schwarz-Clairaut theorem implies that in such conditions the equality $\frac{\partial^2 Wco(\bar{i},\theta_m)}{\partial i_j \partial i_k} = \frac{\partial^2 Wco(\bar{i},\theta_m)}{\partial i_k \partial i_j}$ holds true and renders the Hessian minor $\frac{\partial^2 Wco(\bar{i}\,,\,\theta_m)}{\partial i_j \partial i_k}$ in Eq. 2.2 symmetrical. As a consequence this Hessian minor can be completely identified by just $\frac{n(n+1)}{2}$ elements instead of $n^2$.

If linear media are fatherly assumed, it becomes possible to define the self and mutual inductances $L_{jk}(\theta_m)$ between the windings and they will depend on the angular position only. In such a case the coenergy assumes the form of the well known quadratic form in the current vector $\bar{i}$ and the inductances are the elements of the aforementioned Hessian minor: $L_{jk}(\theta_m) = \frac{\partial^2 Wco(\bar{i}\,,\,\theta_m)}{\partial i_j \partial i_k}$.

By observing Eq. 2.2 at page 8 one infers immediately that the model of the electrical machine for analysis and control purposes, excluding the iron losses, is completely defined and computable once the functions $\frac{\partial^2 \dot{W}co(\bar{i},\theta_m)}{\partial i_j \partial i_k}$, $\frac{\partial^2 Wco(\tilde{\bar{i}},\theta_m)}{\partial i_j \partial \theta_m}$ and $\frac{\partial Wco(\bar{i},\theta_m)}{\partial \theta_m}$ are known in analytical or, more commonly, in tabular form. When the variation of such functions is significant with temperature, in principle, a different set of tables should be used for each significant distribution of the temperatures in the machine. The coenergy state function $Wco\,(\bar{i},\theta_m)$ is the only ultimate information needed in principle, from which all other functions just introduced can be obtained. If the coenergy is known analytically, the partial derivatives are derived by analytical differentiation. If, conversely, the coenergy is known as table, then a sufficient number of points is needed to limit the numerical error affecting the partial derivatives, which must be necessarily computed through finite differences.

At each instant of time $t^*$, the knowledge of such tables, the $n$ currents $i_j(t^*)$, the angular position $\theta_m\,(t^*)$, the speed $\omega_m(t^*)$ and the external torque $T_l(t^*)$ allows to obtain the numerical values of the aforementioned partial derivatives associated with them. The system in Eq. 2.2 at page 8 becomes then algebraic in the total time derivatives $\frac{di_j}{dt}(t^*)$, $\frac{d\omega_m}{dt}(t^*)$ $\omega_m(t^*) = \frac{d\theta_m}{dt}(t^*)$ and solved numerically for them. This in turns allows to compute the state variables at the next time instant by proper numerical techniques (implicit or explicit finite-differences methods).

The computation of the coenergy is nowadays a very standard feature in almost all FEM simulators. For a specific machine design it is therefore procedurally straightforward to obtain the coenergy function $Wco(\bar{i},\theta_m)$, in tabular form for a chosen set of currents and angle values. The computation of the fluxes, equally standard in FEM simulators, already delivers the $n$ first partial derivatives $\frac{\partial Wco(\bar{i},\theta_m)}{\partial i_j}$, thereby leaving only one order of numerical differentiation needed. The FEM simulators usually obtain the electromagnetic torque - which is $\frac{\partial Wco(\bar{i},\theta_m)}{\partial \theta_m}$ - from the coenergy or from the computation of the Maxwell's stress tensor. The first alternative does not improve the accuracy of the torque table, since it already derives the torque from $Wco(\bar{i},\theta_m)$. The second alternative might be perhaps worthwhile to consider for a better numerical accuracy of $\frac{\partial Wco(\bar{i},\theta_m)}{\partial \theta_m}$ than the one obtained a posteriori by differentiating numerically the table $Wco\,(\bar{i},\theta_m)$ with respect to $\theta_m$.

### 2.3 Suitability of the coenergy-based models with modern computers

Still few decades ago, the time needed to compute a sufficient number of coenergy values was prohibitive, thereby posing a fundamental practical limit to this approach based on state functions which, again, is the only correct one to describe the electromechanical conversion in classical hypothesis and presence of non-linearities as well as magnets. The practical impossibility to follow this path - fundamentally only because of lack of computational power - left the more limited linear or pseudo-linear models, that have historical flourished in several decades of machine design and analysis, as the only practical alternative. Such fundamentally flawed and limited models are still the most widely used today, due to the strong influence and historical cultural conditioning they still exert. Nowadays anyway the computational time needed for such tables is no longer overwhelming anymore, therefore one should begin to consider the correct approach to the machine modelling for dynamical, as well as real-time control, purposes and to reject completely the intrinsically limited and flawed pseudo-linear models.

Measured computational times have evidenced that the computation of the fields, and the consequent coenergy, for a single combination of stator currents and angle value in a three-phase, four-poles, Y-connected, synchronous reluctance machine demands about 3 seconds on a workstation already obsolete at the time of this filing. Such a workstation was based on one Intel Xeon processor with 3.6 GHz core and no more than 8 GB RAM.

Neglecting any hypothesis of symmetry in a similar or Permanent Magnet machine, together with the choice of computing the coenergy at each degree of mechanical angle and for 100 values of each of two independent phase currents would mean a coenergy table with 3.6 millions of entries and 125 days of computational time on the aforementioned computer. More recent common workstations or, even better, dedicated computer clusters can easily reduce this time by a factor 10 nowadays. Less than 15 days of computational time to obtain the characterization of the final designs of valuable high-power machines can be acceptable.

One must consider that each FEM computation, for one specific single combination of $n$ constant current values and one $\theta_m$ angle value, is independent from the others. Consequently the computational task is intrinsically purely parallel and it can be distributed on clusters of several economical workstations.

The same tables can be obviously stored in the memory of the real time controllers ruling the drives by which the machine is operated. Such tables constitute a "look-up table" mapping of the state-function based electrical machine model. If the tables are sufficiently dense in number of points computed, they are capable of mapping in real-time the whole machine behaviour according to the only correct approach in the framework of classical electromagnetism. This is especially convenient for flux linkages and torque values which are presently obtained via complex state observers, often using empirical parameters, that have been developed around the pseudo-linear models. The performance of the real-time controller presently needed to calculate such observers could be used differently, and in lesser amount, to access the large tables stored in the memory, whose values could be used in computations requiring much less speed and delivering much more accurate results since they are based on the truly correct approach to the machine modelling. The performance needed by the real-time control architecture is thereby moved from large computational power to large storage capability and fast access of the stored tables, but this is no longer a significant problem nowadays.

The aforementioned example of a coenergy table with 3.6 millions of entries, requires one value of coenergy, two values of currents and one value of angle for each entry. Assuming a 32 bit floating point representation for each real value, the whole coenergy coenergy table would require 57.6 millions of bytes i.e. about 55 MB of memory.

One could compute the partial derivatives by numerical differentiation in real-time since these are very fast operations. Nevertheless, for sake of faster execution, one can also compute the needed $\frac{n(n+1)}{2} + n + 1$ derivatives off-line and store them as look-up tables ready to be just accessed. In the three-phase example this would mean 10 tables for a total of 550 MB, which is an amount of fast, and random, access memory that can be realistically envisaged for the real-time computer architectures of the next future.

It is not necessary that the current values be equally spaced across the whole ($n + 1$)-dimensional domain. If a-priori knowledge about the machine type is possessed, one can increase the points density in the regions where the torque variation with the angle (i.e. $\frac{\partial^2 Wco(\bar{i}, \theta_m)}{\partial^2 \theta_m}$) and/or with the currents (i.e. $\frac{\partial^2 Wco(\bar{i}, \theta_m)}{\partial \theta_m \partial i_j}$) is greater and use a lower points density in the regions where an almost linear media can be assumed.

**2.4 Derivation of the coenergy model from the classical ones and viceversa**

The classical linear machine models in QD reference frame with one zero component in three-phase case, or more than one in the case of multiple phases, can be straightforwardly converted into the coenergy model through the following steps:

1. Obtain the inductance matrix $L_{jk}^p(\theta_m))$ analytically, by anti-transformation of the QD0 model in the phase variables. This obviously considering the proper rotation-related angle, according to the reference frame in which the QD0 model is defined. As stated previously, this matrix represents $\frac{\partial^2 Wco(\bar{i}, \theta_m)}{\partial i_j \partial i_k}$ under the assumption of linear media.

2. Compute $\frac{\partial^2 Wco(\bar{i}, \theta_m)}{\partial i_j \partial \theta_m}$ as $\frac{\partial L_{jk}^p(\theta_m)}{\partial \theta_m} i_k$ and $\frac{\partial Wco(\bar{i}, \theta_m)}{\partial \theta_m}$ as $\frac{1}{2} \frac{\partial L_{jk}^p(\theta_m)}{\partial \theta_m} i_j i_k$

It must be observed that the derivation of the classical linear QD0 models, as described in vast literature, often considers the $n$ <u>self</u> leakage inductances of the $n$ windings <u>only</u>. Such models do not consider all combinations of <u>mutual</u> couplings among the <u>leakage</u> fluxes of the $n$ windings, which are $\sum_{h=2}^n \binom{n}{h}$. Already because of this single reason, they are intrinsically limited and so becomes also the coenergy model derived from them. The computed matrix $L_{jk}^p(\theta_m)$ <u>is not</u> the correct matrix of the inductance of the linear machine, since it does not incorporate comprehensively the effects of <u>all</u> mutual leakage fluxes which are clearly present also assuming the idealization of linear media. Historically, the forcing of the classical QD0 models in machines with high mutual leakage inductances has imposed questionable artifices, which attempt to model the quantitative effects of the neglected mutual leakage inductances with greater equivalent self leakage inductances. An approach that is conceptually clearly erroneous, even in the presence of ideally linear media.

In section 2.2 it was already mentioned that when the coenergy $Wco(\bar{i}, \theta_m)$ $\theta_m)$ of a machine with <u>linear</u> media is known - either analytically or numerically - it is necessarily a quadratic form in the $n$ currents, whose coefficients depend on the angle only and represent the coupling matrix among the $n$ windings. The derivation of $L_{jk}(\theta_m)$ is immediate

by simple differentiation since $L_{jk}(\theta_m) = \frac{\partial^2 Wco(\bar{i}, \theta_m)}{\partial i_j \partial i_k}$ and the so-called "motional terms" are $\frac{\partial^2 Wco(\bar{i}, \theta_m)}{\partial i_j \partial \theta_m}$. Analogously, the torque function is obtained as $\frac{\partial Wco(\bar{i}, \theta_m)}{\partial \theta_m}$. The QD0 model is then obtainable through the usual sequence of derivations amply described in literature.

### 2.5 Sensorless operation and a necessary condition for it as seen from the coenergy-based Model

It is worthwhile to address the aspect of determining $\theta_m$, $\omega_m$ without mechanical, and the $n_{NO}$ non observable currents (forcedly or willingly), once the coenergy and its aforementioned partial derivatives are supposed to be known. Starting from the voltage equations in Eq. 2.1 at page 7 written for a subset of $g \leq (n - n_{NO})$ windings whose terminals are accessible ( therefore whose resistances, currents and voltages are measurable) one can immediately write the system shown by Eq. 2.3 at page 11.

Such a system is non-linear in $\bar{i}_{No}$ and $\theta_m$ but <u>algebraic</u>, not differential, at each instant of time. It is assumed that the fluxes linked with the $g$ windings are known at each time instant, either by integration, as indicated in 2.3, or by possible direct measurement using proper sensors and arrangements.

$$
\begin{cases}
\dfrac{\partial Wco(\bar{i}(t), \theta_m(t))}{\partial i_{O1}} = \lambda_{O1}\left(\bar{i}_O(t), \bar{i}_{NO}(t), \theta_m(t)\right) = \int_{t0^-}^{t} \left[v_{O1}(\tau) - r_{O1} \cdot i_{O1}(\tau)\right] d\tau + \lambda_{O1}(t0^-) \\[3mm]
\dfrac{\partial Wco(\bar{i}(t), \theta_m(t))}{\partial i_{O2}} = \lambda_{O2}\left(\bar{i}_O(t), \bar{i}_{NO}(t), \theta_m(t)\right) = \int_{t0^-}^{t} \left[v_{O2}(\tau) - r_{O2} \cdot i_{O2}(\tau)\right] d\tau + \lambda_{O2}(t0^-) \\[3mm]
\vdots \\[3mm]
\dfrac{\partial Wco(\bar{i}(t), \theta_m(t))}{\partial i_{Og}} = \lambda_{Og}\left(\bar{i}_O(t), \bar{i}_{NO}(t), \theta_m(t)\right) = \int_{t0^-}^{t} \left[v_{Og}(\tau) - r_{Og} \cdot i_{Og}(\tau)\right] d\tau + \lambda_{Og}(t0^-)
\end{cases}
$$

$$(2.3)$$

The $n_{NO}$ non-observable values of current, elements of the vector $\bar{i}_{NO}$, and the angle $\theta_m$ at the same instant are obtainable by solving this algebraic system. The solution exists and it is unique when the $g \times (n_{NO} + 1)$ Jacobian

$$\tilde{J}_{SO} = \left[\ \left[\frac{\partial \lambda_{O1}}{\partial \bar{i}_{NO}}\ ,\ \frac{\partial \lambda_{O1}}{\partial \theta_m}\right]\ ;\ \left[\frac{\partial \lambda_{O2}}{\partial \bar{i}_{NO}}\ ,\ \frac{\partial \lambda_{O2}}{\partial \theta_m}\right]\ \cdots\ \left[\frac{\partial \lambda_{Og}}{\partial \bar{i}_{NO}}\ ,\ \frac{\partial \lambda_{Og}}{\partial \theta_m}\right]\ \right]$$ of the set of g fluxes at the first member of Eq. 2.3 is square and non singular [21].

This <u>necessary</u> condition immediately implies that the complete knowledge of all $n$ machine currents and the sensorless knowledge of the angle $\theta_m$ are possible only for electrical machines where $n_{NO} \leq \frac{n-1}{2}$, since ($n_{NO} + 1$) $\leq g \leq (n - n_{NO})$. As a corollary it descends that the sensorless determination of $\theta_m$ in machines where all $n$ winding currents are observed ( either measured or properly estimated), can be obtained via the knowledge of one single winding flux only, either in the stator or in the rotor.

When $J_{SO}$ is square and non-singular - i.e. the only interesting case for sensorless operation - a two-way mapping exists between the $n_{NO}$ non observable currents, the angle $\theta_m$ and the $n_{NO}$ + 1 chosen observable fluxes. It follows that the instantaneous operating point of the machine can be equivalently identified via the set composed by the $n - n_{NO}$ observable currents and the $n_{NO}$ + 1 chosen observable fluxes. Such a set of quantities will be the most convenient to use during the operation of the machine because it avoids the need of solving in real-time the system 2.3, even when this task is simplified by the tabular - instead of analytical - form of the model. It is therefore very advisable practice to map the coenergy-based tables already during their generation (via computation or identification) not only with the set $\{\bar{i}_O, \bar{i}_{NO}, \theta_m\}$ but ALSO with the set $\{\bar{i}_O, \lambda_{O1}$ À01 ... $\lambda_{Og}\}$. When the non-observable windings are all located on the rotor of the electrical machine, the reasoning concludes that the machine behaviour can be fully described by current and fluxes of the observable windings located on the stator only, provided that they are in sufficient number to satisfy at least the aforementioned necessary condition. This conclusion is in agreement with the statements in [22], but there they were derived under the less generic assumption of linear media, which has been relaxed here.

Once the non-observable currents and the angle $\theta_m$ have been determined by solving Eq. 2.3 at page 11, the torque is immediately obtained by entering them in the function $\frac{\partial Wco(\bar{i}, \theta_m)}{\partial \theta_m}$. It becomes also possible to obtain the value of the speed $\omega_m$ at the same instant through <u>just one</u> of the voltage equations in the differential system Eq. 2.2 at page 8. Equation 2.4 at page 12 shows the result with the $\omega^{th}$ winding, chosen conveniently among the g ones whose resistances, currents and voltages are measurable. The speed estimation is clearly not possible through the $\omega^{th}$ winding in the points where $\frac{\partial^2 Wco(\bar{i}, \theta_m)}{\partial i_w \partial \theta_m} = 0$. In the instants when such a partial derivative is nullified, by the currents and $\theta_m$ assuming its root values, one can use the same Eq. 2.4, but for a different winding, still chosen among the $n$ - $n_{NO}$ observable ones.

$$\omega_m(t) = \frac{1}{\frac{\partial^2 Wco(\bar{i}(t), \theta(t))}{\partial i_w \partial \theta_m}} \cdot \left[ v_w(t) - r_w \cdot i_w(t) - \left( \frac{\partial^2 Wco(\bar{i}(t), \theta(t))}{\partial i_w \partial i_k} \right) \cdot \frac{di_k(t)}{dt} \right] \qquad (2.4)$$

The knowledge of all $n$ winding currents - obtained by solving the algebraic system 2.3 at each instant - allows in principle to determine also their total time derivatives $\frac{di_k(t)}{dt}$ appearing in Eq. 2.4. Nevertheless, for sake of better accuracy and practicability, it is very advisable to know directly such derivatives too. This can be realized by measuring the voltage across sensing coils connected in series to the machine windings and located inside the machine drive. Alternatively, sensing coils mounted around the conductors carrying the machine currents (e.g. Rogowski coils without amplifier and integrator, nowadays so common as rugged and inexpensive sensors), can deliver such derivatives as direct effect of their operating principle.

In the special case where subset of windings, either on the stator or on the rotor, are connected in star (like in a three-phase Y-connected machine), the $n$ currents are no longer independent as otherwise hitherto assumed by the general study. This reduces the number of <u>independent</u> state variables for the coenergy and its derivatives, usually bringing to simplifications of the model, consequence of its reduced dimensionality. For example, in the common case of Y-connected three-phase machines without windings on one of the two bodies, either the rotor or the stator, (e.g. PM, synchronous reluctance), the coenergy and its derivatives are actually functions of two stator phase currents and $\theta_m$ only.

The star connection of windings has positive consequences on the sensorless estimation capabilities of the machine if it involves those windings whose currents are not observable. The reduction of the number of non-observable <u>independent</u> currents is obviously beneficial, since less unknowns are effectively present in the system of Eq.2.3. Equivalently said, $n_{NO}$ is reduced.

The first and most common application of this reasoning occurs in the star-connected squirrel-cage induction motor with $m$ phases on the stator. Provided that the rotor construction allows a common node for all bar currents (i.e. one of the end rings for example, or the short-circuited connection of the slip rings in case of a wound-rotor squirrel-cage machine) the energy conversion can be analyzed by <u>modelling</u> the inaccessible rotor as composed by $m$ - 1 independent windings. The truly independent non-observable rotor currents are $n_{NO} = m$-1, NOT m. The stator windings whose resistances currents and voltages can be measured are $m,$ therefore the <u>necessary</u> condition for sensorless operation $n_{NO} \leq \frac{n-1}{2}$ is satisfied both for the case where one would like to model the rotor as $m,$ Y-connected, windings ($n = 2m$), or for the alternative case where one would like to model the rotor already with m - 1 independent windings only ($n = 2m$ - 1).

Another application of the principle is the estimation of the single field winding current in a synchronous machine with $m$ stator phases and without damping cage. The field current and $\theta_m$ could be known from measurement of two single stator fluxes only. When a rotor damping cage is also present, it can be modelled with $m$ - 1 independent non observable currents, like the previously discussed squirrel-cage rotor. In such a case the necessary condition for sensorless operation would be violated because, already with $n = 2m,$ it results $n_{NO} = m > \frac{(2m-1)}{2}$. Conversely, if the measurement of $\theta_m$ is available, as usual for large machines, only the $m$ rotor currents (one in the field winding and $m$ - 1 in the cage) must be determined, thereby rendering the solution of the problem univocal again. But this arrangement is not sensorless.

If, alternatively, the field winding current is assumed known by <u>any</u> other means (like the common estimation using the stator currents of the brushless exciter), then the measurement of the $m$ stator fluxes suffices to determine the $m$ - 1 cage currents and also the angle $\theta_m$. Sensorless methods based on this scenario are the most common ones.

### 2.5.1 Assumptions of symmetry may impair the sensorless capabilities

The previous reasoning does not assume any symmetry in the <u>overall</u> magnetic structure of the electrical machine seen as a whole, neither if it is an induction one. In reality this is always the case; at first because the numbers of slots in the stator and rotor are usually prime among each other. The pseudo-linear models based on hypothesized symmetry can be detrimental for a complete (i.e. capable of determining the univocal angle $\theta_m$) sensorless operation since they might reduce the rank of the Jacobian $J_{SO}$. The most frequent case occurs when the hypothesized symmetries render the g observable fluxes no longer independent.

For this purpose, it is worthwhile to recall here the sensorless limitations introduced by the common models hypothesizing the zero sum of the voltages across z windings connected in star by one common node $N$. When the z free terminals of such windings are, in turn, connected to z voltage sources $\{e_1, e_2 ... e_z\}$ having a common terminal in a different node $O$, the whole electrical network is binodal and the voltage $v_{NO}$ across the two nodes affects the voltage equations of all branches as shown in Eq. 2.5

$$\frac{d}{dt}\left[\frac{\partial Wco(\bar{i}(t),\theta_m(t))}{\partial i_1}\right] + r_1 \cdot i_1(t) = v_1(t) = e_1 - v_{NO}$$

$$\frac{d}{dt}\left[\frac{\partial Wco(\bar{i}(t),\theta_m(t))}{\partial i_2}\right] + r_2 \cdot i_2(t) = v_2(t) = e_2 - v_{NO} \qquad (2.5)$$

$$\vdots$$

$$\frac{d}{dt}\left[\frac{\partial Wco(\bar{i}(t),\theta_m(t))}{\partial i_z}\right] + r_z \cdot i_z(t) = v_z(t) = e_z - v_{NO}$$

The sum of all equations at both members leads eventually to Eq.2.6 at page 13 for the voltage across the two nodes. Such a voltage is equal to the "common mode" voltage of the z voltage sources $\frac{1}{z}\sum_{p=1}^{z} e_p$ if and only if all resistances $r_p$ are equal AND, mainly, if and only if the sum of the fluxes of all z windings - which constitutes the argument of the total time derivative - is identically zero.

$$v_{NO} = \frac{1}{z}\sum_{p=1}^{z} e_p - \frac{1}{z}\frac{d}{dt}\sum_{y=1}^{z}\left[\frac{\partial Wco(\bar{i}(t),\theta_m(t))}{\partial i_y}\right] - \frac{r_q \cdot i_q(t)}{z} \qquad (2.6)$$

It follows that assuming the sum of the z winding voltages identically zero, necessarily implies that the z fluxes are no longer independent as well. If such fluxes belong to the set of observable fluxes, the rank of the Jacobian $J_{SO}$ is lowered by one, therefore proving that the simplifying hypothesis of machine symmetry ultimately undermines the sensorless capabilities of such models. "Sensorless" intended in the sense of being able to determine $\theta_m$, $\omega_m$ without mechanical sensors as well as all $n_{NO}$ non measured winding currents.

A common example of this limitation is represented by the widely used model of the Y-connected squirrel-cage induction machine when it is assumed linear and without any saliency, both on stator and rotor, as well as with ideal sinusoidal winding distribution. Such a model does not possess an <u>absolute</u> $\theta_m$ for the rotor absolute <u>mechanical</u> position, but it can define a so called "rotor angle" through integration of the speed. Such an angle is meaningful for the position <u>of the EQUIVALENT rotor windings</u> only, and so exclusively after the insurgence of the electromagnetic field. From this simplified symmetrical model one cannot identify an <u>absolute</u> $\theta_m$ position of the rotor body without necessarily associating an initial electromagnetic field distribution to the rotor. In this simplified model, the rotor becomes an abstraction of a physical body for which an independently existing mechanical angle cannot be defined. Conversely and obviously on the other hand, in reality one can always identify a position $\theta_m$ peculiar of the mechanical rotor only as physical body. $\theta_m$ exists without any correlation with the electromagnetic field and, in general, it is only when the field appears that the mechanical position and the "magnetic position" become univocally related. The uniqueness of the mechanical $\theta_m$, on which the proposed model is based, returns possible by removing the hypothesis of symmetry.

When $v_{NO}$ is not <u>exactly</u> equal to the common mode voltage $\frac{1}{z}\sum_{p=1}^{z} e_p$, which is always the real case, it is not possible to determine the z winding voltages from the measurements of $\{e_1, e_2 ... e_z\}$ only. All models stating that $v_{NO}$ is equal to the common-mode voltage are necessarily based at least on the previously discussed symmetry assumptions and they can lead to severe errors in the computation of the fluxes, when <u>for any reason</u> such assumptions do not constitute any longer an acceptable approximation. It descends that the accessibility of the star-center node N is a necessary condition to measure accurately $v_{NO}$, thereby achieving a more accurate determination of the machine fluxes and coenergy. It is also a valid enhancement for control robustness of electrical machines that can become very asymmetric because of faults, therefore it is good practice to provide access to the node N also for machines that by design approximate very well a symmetrical magnetic structure. The connections that render the node N accessible, exclusively for voltage measurements, do not need to carry any significant current, therefore they only require proper insulation level, not conductor section, and because of this they are less expensive.

**2.6 The torque Kernel**

It is always important to know the set of winding currents and angles capable of maintaining the torque constant at a desired value $Tem^d$. The values of the currents are obviously dependent on the specific angle value $\theta_m^d$ and can be obtained through the algebraic non-linear equation 2.7 at page 14.

$$\left. \frac{\partial Wco(\bar{i},\,\theta_m)}{\partial\theta_m} \right|_{\theta_m=\theta_m^d} = Tem^d \qquad\qquad (2.7)$$

The (n - 1) - dimensional subspace of currents capable of nullifying the torque at a certain angle $\theta_m^d$ ( i.e. the "kernel" of $Te_m^d(\bar{i},\theta_m^d)$) is among the most interesting ones, since it does not contribute to the variation of the machine speed and it does not imply electromechanical energy conversion, thereby decoupling the mechanical machine evolution from the electrical one. A lossless synchronous machine acting as rotating VAR compensator for example, operates only with currents which belong to the "kernels" ("subspaces of zero torque"), one for each value of the evolving (in time) angle.

The request of generating zero torque reduces itself to the problem of imposing to the machine, through the drive action, the solution of Eq. 2.7. This for the $\theta_m(t^*)$ specific of each instant of time t*.

As mentioned in Section 2.5 at page 11, machines with $n_{NO}$ non observable currents benefit from the coenergy model tables already mapped also with the set of $n - n_{NO}$ observable currents and fluxes $\{\bar{i}_O,\lambda_{O1} \dots \lambda_{Og}\}$. When such mapping is available, Eq. 2.7 is more usefully solved in that set of state variables, which allow a more immediate identification of the machine operating point at the terminals of the accessible windings.

In the common case of three-phase machines with only three and Y-connected windings, all accessible, only two independent currents exist. As a consequence Eq. 2.7 defines a line (often closed) in the plane of the two independent winding currents, thereby rendering the subspace of zero torque (the "kernel") visually representable. If, in addition, the media are also linear, then the LHS of Eq. 2.7 is a quadratic form in two independent currents and as a consequence, the subspace of zero torque is a conic curve in any orthogonal cartesian plane mapped by them.

**3 IDENTIFICATION OF THE MODEL VIA EXPERIMENTAL MEASUREMENTS**

Chapter 2 has described the features and use of the model assuming that the coenergy state function $Wco$ $(\bar{i},\theta_m)$, and consequently its $\frac{n(n+1)}{2}+n+1$ partial derivatives $\frac{\partial^2 Wco(\bar{i},\theta_m)}{\partial i_j \partial i_k}$, $\frac{\partial^2 Wco(\bar{i},\theta_m)}{\partial i_j \partial \theta_m}$ and $\frac{\partial Wco(\bar{i},\theta_m)}{\partial \theta_m}$ are known by design, either through faithful analytical models or through numerical FEM computations.

The present chapter would like to address the opposite scenario where the coenergy, and its directly derived model, are initially unknown and their identification should be attempted via measurements at the machine ports (mechanical and electrical) without any $\alpha$-priori knowledge about the machine. This scenario is important in the commissioning phase for automatic identification and consequent more automatized tuning performed by the drives themselves. In order to remain adherent to the frequent requirement of zero speed during commissioning, the chapter investigates which are the identification possibilities and limits with $\omega_m$ = 0 by choice.

**3.1 Model identification when all windings are accessible**

The identification of the coenergy via measurements at the machine electrical terminals is an already employed technique for switched, and some synchronous, reluctance machines [15], [23], [24]. By recalling the fundamental relationship 3.1 involving the energy and coenergy of an electromechanical system with $n$ windings [2], the experimental method can be generalized to all electrical machines whose entirety of windings is accessible.

$$We(\overline{\lambda}_p(t),\,\theta_m(t)) \;+\; Wco(\bar{i}(t),\,\theta_m(t)) \;=\; \lambda_p(\bar{i}(t),\,\theta_m(t))\cdot i_p(t) \qquad (3.1)$$

### 3.1.1 Identification, and its limits, through measurements at the electrical ports only

It is assumed that the rotor of the machine can be kept stationary (usually, but not necessarily, locked and held) in a desired angular position identified by the angle $\theta_m^*$. By injecting and measuring $n$ desired currents $\{i_1^*(t), i_2^*(t) \ldots i_n^*(t)\}$ in the $n$ windings (usually by proper control of the voltage sources connected to them) and by also measuring the $n$ winding voltages, one can compute the variations of the coenergy as synthesized by Eq. 3.2 at page 17.

The formulation of Eq.3.2 means that one must impose the $n$ current waveforms in such a way that their instantaneous values span the desired subset of $n$ current associated with the desired angle $\theta_m^*$, but starting from the state associated with all zero currents (symbolized by $\overline{0_n}$). In such a state Eq. 3.1 reduces itself to: $We(\lambda_p(\overline{0_n}), \theta_m^*) + Wco(\overline{0_n}, \theta_m^*) = 0 \ \forall \theta_m^*$. By recording the $n$ current waveforms together with the variation of the coenergy, computed according to difference of integrals shown in Eq. 3.2, one can reconstruct the coenergy function $Wco(\overline{i}^*, \theta_m^*)$ simply by using the time as parameter, provided that $Wco(\overline{0_n}, \theta_m^*)$ and $\lambda_p(\overline{0_n}, \theta_m^*)$ are known.

This method of measuring the coenergy relies on the knowledge of the winding resistances, together with their possible variations. Such variations can be tracked anyway, since the winding terminals are accessible. Proper numerical techniques, often involving filtering, must be used to avoid undesired drift errors in the computation of the integrals.

The coenergy, like the energy, is a state function of the electromechanical system, therefore its value depends only on the point defined by the ordered set of values of its arguments, and not on the trajectory followed to reach that point. One can exploit this property to improve the accuracy in determining the coenergy through Eq. 3.2 at page 17.

$$
\left\{
\begin{aligned}
Wco(\overline{i}^*(t), \theta_m^*) &= \underbrace{\left.\int_{0^-}^{t}\left[v_p(\overline{i^*}(\xi), \vartheta) - r_p \cdot i_p^*(\xi)\right]d\xi \cdot i_p^*(t)\right|_{\vartheta=\theta_m^*,\,\frac{d\vartheta}{dt}=0}}_{termA \quad \text{Scalar product between the variation of fluxes and currents}} \quad +\\
&\quad \underbrace{-\left.\int_{0^-}^{t}\left\{\left[v_\chi(\overline{i^*}(\varepsilon), \vartheta) - r_\chi \cdot i_\chi^*(\varepsilon)\right] \cdot i_\chi^*(\varepsilon)\right\}d\varepsilon\right|_{\vartheta=\theta_m^*,\,\frac{d\vartheta}{dt}=0}}_{termB \quad \text{Variation of Energy stored in the electromagnetic field}} \quad +\\
&\quad + \underbrace{\lambda_p(\overline{0_n}, \theta_m^*)}_{p^{th}\text{ Constant initial flux}}i_p^*(t) \quad + \quad \underbrace{Wco(\overline{0_n}, \theta_m^*)}_{\substack{\text{Constant initial coenergy equal to } -We(\overline{0_n}, \theta_m^*)}}\\[2ex]
&i_1^*(t)\\
&i_2^*(t)\\
&\ \vdots\\
&i_n^*(t)
\end{aligned}
\right\} \Rightarrow Wco(\overline{i}^*, \theta_m^*)
$$

$$(3.2)$$

The proposed methodology, to be applied for each desired $\theta_m$, is illustrated by the following sequence. It is assumed that final values of the $n$ currents for which the coenergy must be computed constitute the vector $\overline{i_B}^*$ After the current-controlled settling transients have elapsed, such values are imposed through DC currents injected in the windings and created either by switching or linear converters, capable of maintaining a low current ripple, or even by batteries and rheostats for maximum measurement accuracy against the influence of the fast current variations and against the error introduced by the influence of the iron losses in the identification phase.

1. Vary the current value of the $r^{th}$ winding from 0 to $i_{Br}^*$ while keeping the currents in all other $n$ - 1 windings unaltered at their present DC value, which is possibly zero. Record the current and voltage transients occurring in <u>all</u> $n$ windings with proper sampling time. Although the evolution of the current in the $r^{th}$ winding, from 0 to $i_{Br}^*$, is in principle irrelevant, good measurement practice strongly suggest to follow a linear ramp which also allows additional identifications as described subsequently

2. After the end of the transients each winding voltage is created by the resistive term only, without any contribution caused by the inductive coupling with the other windings. Consequently it is possible to determine an updated value of the $n$ winding resistances $\{r_1, r_2... r_n\}$ with high accuracy by performing, for each winding, the ratio between the voltage and the injected DC current. For the windings that, procedurally, are still maintained at zero current, a small value should be injected. High accuracy in the determination of the resistances can be achieved by averaging both voltage and current for a sufficiently long time interval before computing the ratio. The time interval anyway must not be too wide, in order to avoid a change in the resistances potentially caused by the modified temperature distribution in the machine.

The averaging eliminates all noise contributions with zero mean value, provided that they behave as deterministic or as ergodic stochastic processes. The average is particularly important when the DC currents are imposed by switching converters whose controlled PWM reflects unavoidable voltage contributions due to the local ("small-signal") inductance matrix pertinent to the biasing point constituted by the present values of the average winding currents. Such voltage contributions are disturbances for the resistance measurements but, since they have always zero mean value, they are eliminated by averaging.

3. With the values of the resistances estimated in the previous step, one can compute the integrals in Eq. 3.2 by using the waveforms recorded in the transient just elapsed. The computation of the integrals delivers also the variations of the fluxes linked with the $n$ windings.

4. The steps 1 to 3 are repeated for the currents of the remaining windings until the point $\overline{i_B}^*$ is reached and the variation of the coenergy associated with it - represented by the difference of the integrals in Eq. 3.2 - is computed.

The computation of the coenergy variation associated with a successive, different, point $\overline{i_C}^*$, for the same $\theta_m^*$, does not require that all currents are returned to zero and the procedure be repeated again, forcedly from the initial point $(\overline{0_n}, \theta_m^*)$. Since the energy and coenergy are state functions indeed, one can move from the point $\overline{i_B}^*$ to $\overline{i_C}^*$ directly, and by following the same aforementioned procedure, i.e. by varying one current at the time while the others are kept constant. The resistance values are always updated only when all currents are DC. The continued computation of the integrals in Eq. 3.2 when at least one current varies, assures that at any instant of time the variation of the coenergy is the one associated with the present value of the winding currents.

Conversely, it is conceptually necessary to return all currents to zero before changing the angle $\theta_m$ to a new imposed value. Equation 3.2 ceases to be valid if the angle is varied while the currents are different from zero. To change position of the rotor implies indeed that energy is transferred to the electromagnetic field. This is ultimately reflected by the variation in the term $W_{CO}(\overline{0_n}, \theta_m^*)$ when all currents are zero. If the movement was performed while at least one current is different from zero, then the energy transferred to the field would not originate from the electrical terminals only, therefore the variation of the coenergy computed through the integrals of the electrical quantities only would be no longer correct.

It must be highlighted that the use of switching converters necessarily implies PWM voltages at the machine terminals which can be large in magnitude and frequency (especially with the need of reduced ripple), even if the imposed current values are moderate. This creates a dissipative behaviour in the machine - mirror of the iron losses - which influences the voltage transients and ultimately the determination of the fluxes variation performed through them. If, conversely, the winding currents are obtained via linear sources, even batteries or rheostats, the iron losses are almost eliminated (they exist only during transients) with consequence improved accuracy in the determination of the coenergy variation.

With this methodology, the determination of the resistances is continuously updated during the identification process and, mainly, it is confined to the time intervals in which ALL $n$ currents are stable at their imposed constant (DC) values, thereby guaranteeing that the measured winding voltages are due to the resistive contribution only. For this same reason, the integrals in Eq. 3.2 at page 17 must not be computed during the time intervals of stable DC currents. This separation reduces the errors in the flux computation by methodological principle.

Specularly, procedurally speaking, the voltage transients during the controlled variation of one winding current at the time are the only source to determine the variations of the fluxes and of the coenergy by the integrals shown in 3.2 at page 17. Such integrals must use the values of the resistances determined in the closest time interval precedent to their computation and they require that currents and voltages be sampled with proper accuracy.

**3.1.1.1 Improved control and identification accuracy through sensing windings**

One would like to propose here a constructive solution to eliminate the need of knowing the winding resistances, thereby improving both the quality of the machine identification and, mainly, the quality of its control. The proposal is based on inserting one "sensing" winding of small wire section all around the perimeter of each "power" winding during its construction. If the wire of the sensing winding follows closely the closed curve defined by the "shape" of the power winding indeed, it can be assumed very reasonably that the same field distribution is associated with both. As a consequence the flux in the sensing winding is proportional to the flux linked with the power winding with very good approximation. The proportionality coefficient is the ratio between number of turns of the power winding and the number of turns of the sensing winding. The terminals of the $n$ "sensing" windings should be rendered accessible in a separate terminal box of the machine and used for improved control of it. With such an arrangement the control can "by-pass" completely the problem generated by the uncertainty and variation of the winding resistances, a problem which is particularly severe when the fluxes have very reduced total time derivative (i.e. low voltage at the winding terminals).

This arrangement is considerably more feasible for large machines where the sensing winding can be embedded in each coil during the wrapping of the insulation layers. One must recall indeed that the sensing windings have no current-carrying requirements at all, the currents inside them can remain well below 0.1 A. The insulation level of the sensing winding is not a technological problem with machine up to 15 kV since small-section, high-voltage wire is very common, as used for Cathode Ray Tube television for example.

**3.1.1.2 Machines with non zero flux and coenergy at zero currents.**

**The necessity of mechanical measurements**

If the nature of the machine is such that the initial fluxes $\lambda_p(\overline{0_n}, \theta_m^*)$ and initial coenergy $Wco(\overline{0_n}, \theta_m^*)$ with all zero winding currents are identically zero, then the illustrated procedure determines the coenergy too, not only its variations due to the integrals. As a consequence therefore the machine model defined by the system 2.2 at page 8 can be considered identified without the need of measuring other quantities like the torque at standstill. This is the case of all machines not strictly based on the magnetic hysteresis, i.e. those which do not utilize permanent magnets.

If, conversely, the initial fluxes $\lambda_p(\overline{0_n}, \theta_m^*)$ and initial coenergy $Wco(\overline{0_n}, \theta_m^*)$ are non zero for some values of $\theta_m$, it is furthermore necessary to determine they variations with the angle in order to reach a complete identification of the machine model.

The initial fluxes $\lambda_p(\overline{0_n}, \theta_m^*)$ depend on $\theta_m^*$ only and because of this they don't appear in the second-order partial derivatives $\frac{\partial^2 Wco(\overline{i}, \theta_m)}{\partial i_j \partial i_k}$, therefore they do not introduce ambiguities for the final purpose of identifying the nonlinear coefficients of the total time derivatives $\frac{di_k}{dt}$ in the model represented by Eq. 2.2 at page 8. On the other hand, the dependence of the initial fluxes $\lambda_p(\overline{0_n}, \theta_m^*)$ and the initial coenergy $Wco(\overline{0_n}, \theta_m^*)$ on $\theta_m$ is the reason why $\frac{\partial \lambda_p(\overline{0_n}, \theta_m^*)}{\partial \theta_m}$ and $\frac{\partial Wco(\overline{0_n}, \theta_m^*)}{\partial \theta_m}$ necessaril appear in the artial derivatives $\frac{\partial^2 Wco(\overline{i}, \theta_m)}{\partial i_j \partial \theta_m}$ (those multiplied by $\omega_m$ in the model), as well as in the artial derivative $\frac{\partial Wco(\overline{i}, \theta_m)}{\partial \theta_m}$ representing the electromagnetic torque.

One can observe that real constants - i.e. independent from the angle and from any current - superimposed to all fluxes and coenergy do not introduce ambiguities in the machine model, since they are eliminated by all partial differentiations leading to the model summarized by the system 2.2. This does not mean that such constants do not influence the model, it just guarantees that they don't render it ambiguous. A large constant biasing flux for example leads to deeper iron saturation, which is necessarily reflected in different values of the partial derivatives composing the model. Such specific values of derivatives denounce the presence of the larger flux but their identification is not impaired by it, even if it is unknown in its absolute value.

The identification of the initial fluxes and coenergy at standstill is not possible, in the general case, through measurements of voltages and currents only. This simply because, as fundamental law, the voltages and their integrals define only the flux variations with respect to a non knowable constant. If additional flux sensors were used inside the machine, clearly the determination of the initial fluxes would be trivial.

By allowing even a slow, almost static, rotation of the rotor and the measurement of the torque at standstill with the means described in Section 3.1.2 at page 22 one can identify $Wco(\overline{0_n}, \theta_m^*)$ via Eq. 3.3, where $W_{co}(\overline{0n}, \theta_0)$ is clearly a real constant for all independent variables, therefore not capable of introducing any ambiguity in the model, as discussed previously

$$Wco(\overline{0_n}, \theta_m^*) = \int_{\theta_0}^{\theta_m^*} Tem(\overline{0_n}, \varepsilon)d\varepsilon + Wco(\overline{0_n}, \theta_0) \qquad (3.3)$$

The initial fluxes $\lambda_p(\overline{0_n}, \theta_m^*)$ cannot descend from $Wco(\overline{0_n}, \theta_m^*)$ as partial derivatives with respect to the currents because this value of the coenergy is specifically computed for all zero currents, no variations of them in a neighborhood of $\overline{0_n}$ is contemplated, therefore even conceptually the differentiation is not possible. It follows that the initial $\lambda_p(\overline{0_n}, \theta_m^*)$ must be obtained through a different method. By observing the system 2.2 at page 8, the most accurate proceeding, which strictly respects the zero current condition, is to rotate the rotor at a constant speed $\omega_m^*$, with all windings open, and to integrate the winding voltages created by the consequent total time derivatives of the initial fluxes. Equation 3.4 expresses the principle, where $\lambda_p(\overline{0_n}, \theta_0)$ is again a real constant for all independent variables, therefore it does not introduces ambiguities in the model even if it remains unknown.

$$\lambda_p(\overline{0_n}, \theta_m^*) = \frac{1}{\omega_m^*} \int_{\theta_0}^{\theta_m^*} v_p(\frac{\kappa}{\omega_m^*})d\kappa + \lambda_p(\overline{0_n}, \theta_0) \qquad (3.4)$$

The conclusion is that the complete identification of machines with significant presence of magnetic field $\vec{B}$ also when all winding currents are zero (e.g. in case of permanent magnets) requires:

1. An almost static rotation of the rotor, where the static torque is measured, without the need of expensive torsiometers (as described in Section 3.1.2). This measurement is necessary to identify the variations of the initial coenergy $Wco(\overline{0_n}, \theta_m)$ with the angle $\theta_m$.

2. A rotation of the rotor at constant speed but <u>without the need of measuring the torque,</u> just the voltages at the winding terminals, all kept open. This measurement is necessary to identify the variations of the $n$ initial fluxes (i.e. at zero currents) $\lambda_p(\overline{0_n}, \theta_m)$ linked to the windings with respect to the angle $\theta_m$. Conceptually, such quantities are unrelated to, and cannot be extracted from, $W_{co}(\overline{0_n}, \theta_m)$.

### 3.1.1.3 Partial derivatives of the coenergy through parametric interpolation and possible indirect measurement

Once the coenergy is known, the artial derivatives $\frac{\partial^2 Wco(\overline{i}, \theta_m)}{\partial i_j \partial i_k}$, $\frac{\partial^2 Wco(\overline{i}, \theta_m)}{\partial i_j \partial \theta_m}$ and $\frac{\partial Wco(\overline{i}, \theta_m)}{\partial \theta_m}$ are obtained by numerical methods, but being careful in avoiding to compute directly the derivatives by simply first-order differences. An advisable method is to use locally, for each point (i.e. $n$ current values and one $\theta_m$), an interpolating surface of known mathematical expression (e.g. a polynomial or a spline in such variables) and compute its coefficients based on a sufficient number of points in the neighborhood of the points of interest. When the coefficients of the interpolating function are computed for that specific point, then, immediately, the values of the partial derivatives in it become known too.

One can also observe that $\frac{\partial^2 Wco(\overline{i}, \theta_m)}{\partial i_j \partial i_k} = \frac{\partial}{\partial i_j}\left(\frac{\partial Wco(\overline{i}, \theta_m)}{\partial i_k}\right)$ and, according to the Schwarz - Clairaut theorem, $\frac{\partial^2 Wco(\overline{i}, \theta_m)}{\partial i_j \partial \theta_m} = \frac{\partial^2 Wco(\overline{i}, \theta_m)}{\partial \theta_m \partial i_j} = \frac{\partial}{\partial \theta_m}\left(\frac{\partial Wco(\overline{i}, \theta_m)}{\partial i_j}\right)$ holds true. The $n$ first-order partial derivatives $\frac{\partial Wco(\overline{i}, \theta_m)}{\partial i_j}$ are the fluxes linked with the $n$ windings determined either indirectly, through numerical integration of the measurements using the aforementioned methodology, or directly via proper sensors (or a combination of such techniques). As a consequence the numerical values of the second order partial derivatives of the coenergy - necessary for the voltage equations of the system 2.2 at page 8 - can be extracted with greater accuracy from the measurements by using one order of numerical differentiation only, instead of two orders that would be necessary starting from the measured values of the coenergy.
By following the proposed methodology one can cross-verify the results for what concerns the partial derivatives

$\dfrac{\partial^2 Wco(\bar{i}, \theta_m)}{\partial i_j \partial i_k}$ since they can be indirectly measured. Indeed, during a variation of the single current in the $r^{th}$ winding - while all other $n$ - 1 currents are kept constant - the $n$ winding voltages experience a transient which is caused by the variation of the $r^{th}$ current only.

The $n$ voltage equations from the system 2.2 at page 8 can then be reduced to the $n$ equations shown in Eq. 3.5 at page 21 since the derivatives of all currents are zero with the exception of the one in the $r^{th}$ winding. Since the partial derivatives depend on all currents, the values obtained from 3.5 are rigorously associated with the points $\{i_{A1}^*(t), i_{A2}^*(t) \ldots i_r(t) \ldots i_{An}^*(t)\}$ only, which are reached during the evolution of $i_r(t)$ from $i_{Ar}^*$ to $i_{Br}^*$.

$$\frac{\partial^2 Wco(\overline{i_A}^*, \theta_m^*)}{\partial i_j \partial i_r} = \frac{v_j(t) - r_j \cdot i_j(t)}{\frac{di_r(t)}{dt}} \qquad (3.5)$$

By producing linear current variations for each $r^{th}$ winding, the derivative at the denominator of Eq. 3.5 is rendered constant, therefore more precisely measurable, with consequent greater accuracy of the indirect measurements of $\dfrac{\partial^2 Wco(\bar{i}, \theta_m)}{\partial i_j \partial i_k}$.

The advantages of this identification method are:

- If the machine has zero initial fluxes AND zero coenergy by zero winding currents, only the measurements at the electrical terminals of the machine are needed, no torque measurement is necessary.

- The accuracy is improved by frequent accurate measurement of the winding resistances in the time intervals when the constant winding currents eliminate any voltage contribution by electromagnetic induction among the windings.

- By varying linearly one winding current at the time, the variations of the fluxes and of the coenergy are more accurately measured

- The use of constant currents in steady state permits very accurate current and resistance measurement, additionally it can potentially eliminate the iron losses (via proper voltage sources) together with the related measurement errors they otherwise introduce in the identified winding resistances.

- Since the angle $\theta_m$ can be imposed with great accuracy, the numerical partial derivatives with respect to it are less prone to numerical errors related to the angle.

As limitation one can mention:

- Machines with significant field B even when all winding currents are zero (e.g. permanent magnets) cannot be fully identified without static torque measurement and, independently, rotation at constant speed (without torque measurement).

This is not a limitation of the coenergy-based model, which remains the most general one but a fundamental physical feature of the electromechanical conversion

The computation of the time integrals of measured electrical quantities, in order to determine the variations of the fluxes and of the coenergy, introduces unavoidable numerical errors. A sufficiently high sampling rate for the measured currents and voltages during the transients should be used together with a proper numerical method as necessary (not sufficient) practices.

**3.1.2 Improved accuracy via measurements at both electrical and mechanical ports**

If the measurement of the mechanical torque at the shaft is possible, the identification of the machine can benefit of a much greater accuracy as illustrated subsequently. A very important aspect to consider is that the torque measurement is at standstill, a condition which does not require an expensive and low accuracy rotating torque-meter. The torque can be measured by one (or better two) much more accurate load-cell(s) mounted at one (or better two) end(s) of a properly stiff leverage mounted on the shaft. Alternatively one single load cell can be mounted against the pinion of a "worm screw" gearbox, directly coupled to the rotor shaft during the commissioning phase. This arrangement would simplify considerably the control of the angle $\theta_m$ and would be less invasive in several commissioning scenarios.

The identification is based mostly, although not exclusively, on the torque equation in the system 2.2 at page 8 instead of the voltage equations. By zero speed indeed, and by neglecting the iron losses in the rotor, the torque measured at the shaft for a desired set of $n$ currents $\{i_1^*(t), i_2^*(t) \ldots i_n^*(t)\}$ and one desired angle $\theta_m$ is equal to $\frac{\partial Wco(\bar{i}^*, \theta_m^*)}{\partial \theta_m}$ and the coenergy can be easily obtained as expressed in Eq.

$$Wco(\bar{i}^*, \theta_m^*) = \int_{\theta_0}^{\theta_m^*} Tem(\bar{i}^*, \varepsilon)d\varepsilon + Wco(\bar{i}^*, \theta_0) \qquad (3.6)$$

The measurement of the torque, clearly delivers $\frac{\partial Wco(\bar{i}^*, \theta_m^*)}{\partial \theta_m}$ directly, thereby with greater accuracy when compared to the determination via finite differences applied to the coenergy. By acting in this way one obtains a direct mapping of the torque with the current and angle values, which is the best input-output identification possible simply because it is the most direct, considering the type of constitutive equation of the system.

The use of the torque measurement brings the following advantages:

1. The determination of the coenergy via measurement at the winding terminals, as described in Section 3.1.1 is necessary for the angle $\theta_0$ only.

2. For the other angle values, it is no longer necessary to measure the winding resistances for the needed accuracy. Since the increments of the coenergy are obtained by integrating the torque, function of the currents and angle only, one circumvents the influence of the resistances completely.
This means that after having determined $Wco(\bar{i}^*, \theta_0)$ the identification can continue for a long time without the need of measuring periodically the winding resistance. This is particularly advantageous for the measurements with same current values but different angle values, which are the ones in need of the greatest amount of time.

3. The usual rotor stiffness renders the measured torque a more accurate replica of the electromagnetic torque, provided that the stiffness of the leverage or "worm screw" measuring apparatus is adequate.

## 3.2 Identification of machines with some non-observable windings

The identification of machines with non-observable windings in general demands for measurement at both electrical and mechanical ports, as it will be illustrated subsequently.

In order to built a univocal correspondence between the electrical and mechanical quantities measured at the accessible terminals only (electrical and mechanical), it is firstly and foremost required that the numbers of observable and non-observable winding satisfy the necessary condition derived in section 2.5 at page 11.

With this assumption and IF the coenergy function was known, as it is the underlying hypothesis of Chapter 2, one could determine the angle as well as the currents in the non-observable windings. Within the present framework of reasoning anyway, such function is NOT known but, conversely, one attempts its identification by measurements at the ports only. The ignorance of the coenergy function does not allow to derive the non-observable currents , even if the angle is measured during the identification process, simply because the elements of the Jacobian minor

$$J_{SO} = \left[ \left[\frac{\partial \lambda_{O1}}{\partial i_{NO}}, \frac{\partial \lambda_{O1}}{\partial \theta_m}\right] ; \left[\frac{\partial \lambda_{O2}}{\partial i_{NO}}, \frac{\partial \lambda_{O2}}{\partial \theta_m}\right] \cdots \left[\frac{\partial \lambda_{Og}}{\partial i_{NO}}, \frac{\partial \lambda_{Og}}{\partial \theta_m}\right] \right]$$ discussed in section 2.5 at page 11 are not known neither analytically, nor numerically. It follows that being impossible to measure directly the $n_{NO}$ non-observable current, the coenergy function $Wco(\bar{i}, \theta_m)$ cannot be identified.

Nevertheless, an input-output mapping of the machine, sufficient for the modelling at the terminals, can still be obtained if one assumes that the unknown coenergy function possesses square and non-singular Jacobian $J_{SO}$ in all points of interest. Indeed, under such a realistic hypothesis and the imposed angle $\theta_m^*$, the knowledge of the $n - n_{NO}$ currents and of $n_{NO}$ fluxes, chosen among those of $n - n_{NO}$ observable windings, is equivalent to the knowledge of all $n$ currents. The non-singularity of the Jacobian assures indeed that such an information is in one-to-one correspondence with all $n$ currents and $\theta_m^*$, therefore with the whole argument of the coenergy and its partial derivatives. Because of that, the values of the $n - n_{NO}$ currents and of $n_{NO}$ observable fluxes determine univocally also the electromagnetic torque which can therefore be mapped through them instead of the $n$ winding currents.

The measurement methodology for machines with non-observable windings is not aimed at identifying the coenergy $Wco(\bar{i}, \theta_m)$ but at identifying the input-output mapping among: observable currents, some observable fluxes, angle and torque values, which is sufficient for the characterization of the machine as "black-box" at the terminals. The existence and univocity of this mapping is clearly consequence of the physical nature of the coenergy function $Wco(\bar{i}, \theta_m)$, but such a function is not determinable because of the inaccessibility of some winding currents.

If additional hypotheses on the machine were introduced, or the rotation with $\omega_m \neq 0$ was allowed, the space of uncertainty can be reduced, thereby allowing an identification of the coenergy even with the limited measurements accessible. A first common example of this approach is the <u>arbitrary</u> subdivision of the "leakage inductance" of squirrel-cage induction machines between stator and rotor. The locked rotor tests allow to determine the effects of a so-called "total" leakage inductance at the stator terminals, and this is the only information that can be extracted at $\omega_m = 0$. Then, a portion of the identified "total" leakage inductance is arbitrarily assigned to the stator and the remaining part to the rotor. A common choice is to split the inductance equally between stator and rotor but official Standards (some belonging to the NEMA grouping) specify different percentages depending on the machine ratings. The arbitrary splitting of the leakage inductances introduces an arbitrary hypothesis on the structure of the coenergy function that can consequently be identified in the form of the common equivalent linear model of the squirrel-cage machine. It's a typical case of parametric identification of a function (a model) whose structure is imposed a-priori; but such models have clearly no legitimacy when their hypotheses cease to be valid.

### 3.2.1 Identification method of the input-output mapping

The procedure to identify the input-output mapping is similar to the one illustrated in Section 3.1.1 at page 16 but in this case the measurement of the torque at standstill as described in Section 3.1.2 at page 22 is mandatory whichever the nature of the machine is.

The values of the torque is sampled together with the values of the $n - n_{NO}$ observable currents and the values of $n_{NO}$ fluxes chosen among those of the $n - n_{NO}$ observable windings. During the transients created by the ordered variations imposed to the observable currents, a table of correspondence - parameterized by the time values - is built among the torque, the $n - n_{NO}$ currents, the $n_{NO}$ computed (or directly measured) fluxes and the angle. The input-output mapping is then extracted implicitly by eliminating the time in the recorded waveforms, and computed integrals (or measured fluxes), considering it as a parameter.

Even by imposing steady-state constant currents in the observable winding, the use of the time as parameter is necessary in this case. The computed (or measured) fluxes indeed are obviously influenced also by the values of the non-observable currents, which usually (but not necessarily) undergo an evolution during the transients created by the controlled variation of the observable currents to explore the desired set of points. Each value of these fluxes contains the information of both observable and non-observable currents. As a consequence the effect of the unknown values of the non-observable currents can be captured only during the transients, when the voltage induced by them in the observable windings is a detectable measure of their influence on the fluxes. Not all set of values of observable fluxes can be reproduced by using constant values of the observable currents only. This is a key observation. If it were so indeed, it would mean that the Jacobian $J_{SO}$ at the basis of the univocal mapping would be singular. In turn, this would ultimately mean that the non-observable current would not have any influence on the torque and voltages of the machines, a statement which is in clear in contradiction with the electromechanical conversion.

Similarly, in general, not all independent values of the non-observable currents can be stimulated by acting on the controllable currents. It's fundamentally a problem of controllability of the system and consequence of the fact that either the current or the voltage can be imposed at the terminal of an electrical or mechanical port, but never both simultaneously. The $n_{NO}$ measured fluxes cannot be imposed because the currents in the windings with which they are associated are already imposed. Such fluxes are <u>consequences</u> of the values of both the observable and non-observable currents and, if the Jacobian $J_{SO}$ is non singular, they allow the univocal determination of the $n_{NO}$ non observable currents. This is very different from affirming that such non-observable currents can be manipulated independently from the observable ones by acting on the $n_{NO}$ observable fluxes. This is not possible indeed, because of the fundamentally impossibility of imposing simultaneously voltage and current to the terminals of an electrical port. When either current or voltage sources are connected to the terminals of the $n_{NO}$ non-observable windings, the values of the $n_{NO}$ currents flowing in them influences the values of the computed (or measured) $n_{NO}$ fluxes, which, together with the $n - n_{NO}$ imposed currents assure the univocity of the state variables of the machine.

The non-ambiguous state determines univocally one value of the measured torque, therefore an input-output mapping having current, fluxes and angle as independent variables is always possible, even when - by nature of the specific machine - not <u>ALL</u> possible values of fluxes and torques are obtainable because of the impossibility to impose all *n* currents totally independently. The first and most common example is obviously the squirrel-cage induction machine.

### 3.3 Identification of the torque Kernel

Without any knowledge a-priori on the electrical machine, it is not possible to know which are the set of *n* current values that create zero torque at a specified angle $\theta_m$. It follows that under total ignorance about the machine, even its type, it is not possible to guarantee zero torque in the identification process, in case this was a further commissioning requirement, additional to $\omega_m$ = 0. Clearly, in practice, at least the type of the machine is known thereby allowing a better estimation of what could be the subspace of zero torque. Nevertheless, since such a subspace,for its own definition, spans only a subset of the possible current values, a complete identification of a machine is never possible if one is constrained to generate only zero torque during the identification phase.

The experimental identification of the subspace of zero torque (i.e. the "kernel" of $Tem^d(\overline{i},\theta_m)$ ) necessarily requires the measurement the torque at standstill for different imposed angles, as described in section 3.1.2 at page 22. The measurement technique in this case can assume the character of a typical "zeroing" method, where desired quantities are determined indirectly by observing the nullification they produce on the value of a sensing one. In this case the desired quantities are the winding current sets that produce zero torque and the quantity sensed for nullification is the torque itself.

As typical for all "zeroing" methods, it is not necessary to measure the quantity to be nullified with high accuracy but, conversely, the sensibility of the measurement apparatus used is important. Apparatuses with low accuracy and high sensibility can be less expensive because they are usually smaller, since they do not need to measure the quantity up to its nominal value, but only around its zero. This applies also to the identification of the subspace of zero torque which demands for a much smaller leverage or "worm thread" apparatus and a much smaller load cell connected to the machine shaft.

## 4 CONCLUSIONS

The analysis summarized by this document has addresses the computation, use and experimental identification of a generic model based on the coenergy of the electromagnetic field as state function, therefore valid for all types of n-windings electrical machines.

Since the systematization of the classical electrodynamics at the beginning of the 20th century, the classical description of an electromechanical converter by state functions (energy or coenergy) is established and recognized as the only correct one, especially in presence of non-linear media. The pseudo-linear models flourished in the history of the studies about electrical machines constituted the only objective possibility, due to the lack of computational power, both in design and, until recently, also in control.

Conversely nowadays, the availability of inexpensive fast computers, even inside the real-time controllers, begins to show the potential for a radical change of approach, thereby possibly reverting the machine analysis and control to the aforementioned correct fundamental models. The pseudo-linear models indeed have partial validity and their inherent oversimplification is often cumbersome to adapt to the observed experimental behaviour, as well as to the modern modelling and performance needs. In any case they are theoretically wrong and potential sources of erroneous results in highly non-linear operation, which is more and more common nowadays.

Such fundamentally limited models are still most used owing to the strong influence and historical cultural conditioning they still exert. Because of this influence the presently available computational power is still often used in the attempt to extend their validity through complex artifices. This same considerable effort, presently devoted to adapt such intrinsically flawed models, could be channeled more fruitfully in the near future towards computing the truly correct models based on state functions.

In the framework of the analysis apparatuses were mentioned that, when added to the machines and their drives, are capable of improving the control performances and identification accuracies. The validity of such additions is independent from the type of model adopted.

The reasoning about the identification of the model has highlighted which are the possibilities and the limitations under the common requirement of zero speed. It has been shown that the complete model identification for machines having considerable flux and coenergy, even when all winding currents are zero (like in case of permanent magnets) needs the measurement of torque at standstill and the rotation at constant speed (without torque measurement).

Necessary conditions to be satisfied for full identification and sensorless operation of machines with non-observable winding currents have been derived too.

# EP 2 541 757 B1

## 5 REFERENCES

[1] John L. Synge, Alfred Schild: *Tensor Calculus.* Dover Publications, 1 st edition, 1978.

[2] White, David C. and Herbert H. Woodson: *Electromechanical energy conversion.* Wiley, 1959.

[3] Doherty, RE and RH Park: *Mechanical force between electric circuits.* Transactions, AIEE, February, 1925.

[4] Coulomb, J.: A methodology for the determination of global electromechanical quantities from a finite element analysis and its application to the evaluation of magnetic forces, torques and stiffness. Magnetics, IEEE Transactions on, 19(6):2514-2519, 1983.

[5] Brown, JE, KP Kovacs, and P Vas: A method of including the effects of main flux path saturation in the generalized equations of ac machines. IEEE Transactions on Power Apparatus and Systems, pages 96-103, 1983.

[6] Mizia, J., K. Adamiak, A. R. Eastham, and G. E. Dawson: Finite element force calcula-tion: comparison of methods for electric machines. Magnetics, IEEE Transactions on, 24(1):447-450, 1988.

[7] Warzecha, A.: The non-linear characteristics of ac machines based on the calculation of magnetic field co-energy. COMPEL: The International Journal for Computation and Mathematics in Electrical and Electronic Engineering, 17(3):324-328, 1998.

[8] Chang, L, AR Eastham, and GE Dawson: Permanent magnet synchronous motor: finite element torquecalculations. pages 69-73, 1989. Industry Applications Society Annual Meeting, 1989., Conference Record of the 1989 IEEE.

[9] Proca, AB, A Keyhani, A EI-Antably, W Lu, and M Dai: Analytical model for permanent magnet motors with surface mounted magnets. IEEE Transactions on Energy Conversion, 18(3):386-391,2003.

[10] Cheng, M, KT Chau, and CC Chan: Static characteristics of a new doubly salient permanent magnet motor. IEEE Transactions on Energy Conversion, 16(1):20-25, 2001.

[11] Nehl, TW, FA Fouad, and NA Demerdash: Determination of saturated values of rotating machinery incremental and apparent inductances by an energy perturbation method. IEEE Transactions on Power Apparatus and Systems, pages 4441-4451, 1982.

[12] Ferrero, A. and A. Raciti: A digital method for the determination of the magnetic characteristic of variable reluctance motors. Instrumentation and Measurement, IEEE Transactions on, 39(4):604-608, 1990.

[13] Ferrero, A., A. Raciti, and C. Urzi: An indirect test method for the characterization of variable reluctance motors. Instrumentation and Measurement, IEEE Transactions on, 42(6):1020-1025, 1993.

[14] Staton, D. A., W. L. Soong, R. P. Deodhar, and T. J. E. Miller: Unified theory of torque production in ac, dc and reluctance motors. In Industry Applications Society Annual Meeting, 1994., Conference Record of the 1994 IEEE, pages 149-156 vol.1, 1994.

[15] Sharma, V. K., S. S. Murthy, and B. Singh: An improved method for the determination of saturation characteristics of switched reluctance motors. Instrumentation and Measurement, IEEE Transactions on, 48(5):995-1000, 1999.

[16] Vagati, A., M. Pastorelli, and G. Franceschini: High-performance control of synchronous reluctance motors. Industry Applications, IEEE Transactions on, 33(4):983-991,1997.

[17] Cossar, C, M Popescu, TJE Miller, M McGilp, and M Olaru: A general magnetic-energy-based torque estimator: Validation via a permanent-magnet motor drive. IEEE Transactions on Industry Applications, 44(4):1210-1217, 2008.

[18] Aho, Tuomo: Electromagnetic Design of a Solid Steel Rotor Motor for Demanding Operation Environments. PhD thesis, 2007 Lappeeranta University of Technology.

[19] Jackson, John David: Classical Electrodynamics. John Wiley & Sons, Inc., 3rd edition, 1999.

[20] Tamm, Igor E.: Fundamentals of the Theory of Electricity. MIR Publisher, Moscow, USSR, 1 st edition, 1979.

[21] Gantmakher, F. R.: The theory of matrices. Chelsea Pub. Co., New York, 1960. by F.R. Gantmacher ; translation by K.A. Kirsch. 24 cm. English translation of the Russianlanguage book Teoriya Matrits by F. R. Gantmacher.

[22] Vas Peter , Brown J.: Real-time monitoring of the electromagnetic torque of multi-phase machines, 1985.

[23] Stumberger, G., B. Stumberger, and D. Dolinar: Identification of linear synchronous reluctance motor parameters. Industry Applications, IEEE Transactions on, 40(5):1317-1324, 2004.

[24] Kucuk, F., H. Goto, H. J. Guo, and O. Ichinokura: Fourier series based characterization of switched reluctance motor using runtime data. Electrical Machines (ICEM), 2010 XIX International Conference on.

**NOTES FROM ALL CHAPTERS**

1. A more rigorous formulation should involve the relativistic transformation of the fields, especially for the windings located on the moving body which are not in an inertial reference frame. Although the relationships formulated neglecting this aspect can give proper quantitative results, they are not theoretically rigorous in a broader sense [19], [20]

**Claims**

1. A control device (11) for controlling and/or identifying in real-time an electric machine (22) with $ks$ windings on a stator and $kr$ windings on a rotor, wherein $ks + kr = n$ and wherein either one of $ks$ and $kr$ may be zero, the control device comprising:

   - at least one input (12) via which control commands are capable of being received and at least one output (14) via which control commands to a driver (21) of the electric machine are capable of being output;
   - machine modeling means (15) provided for modeling in real-time the behavior of the electric machine; and
   - decision means (16) operatively connected to the input, the output, and the machine modeling means and provided for (i) determining in real-time the control commands to be output to the driver (21) of the electric machines (22) based on input control commands and results from the real-time modeling of the behavior of the electric machines, (22) and (ii) outputting in real-time the determined control commands at the output, wherein
   - the machine modeling means is provided for modeling the behavior of the electrical machine (22) through at least one functional mapping suited for correlating sets of values of electrical and mechanical quantities and/or sets of values of their total or partial derivatives, and/or integral functions with one another, and
   - said electrical and mechanical quantities comprise winding currents, winding voltages, magnetic fluxes, mechanical displacements, and/or electromagnetic torques and forces, and
   - said functional mapping comprises at least one algorithm or mathematical equation based on at least one state function associated with the electromagnetic field inside the electrical machine (22) or based on at least one partial derivative of said state function, **characterized in that**
   - the state function model is a model based on the coenergy associated with the electromagnetic field inside the electric machine (22) and is described by the following equation system, or a discretized form thereof:

$$\begin{cases} \dfrac{d}{dt}\underbrace{\left(\dfrac{\partial Wco(\bar{i}(t)\,,\,\theta_m(t))}{\partial i_j}\right)}_{\text{Flux }\lambda_j(\bar{i}(t)\,,\,\theta_m(t))} = v_j(t) - r_j \cdot i_j(t) \\[2em] \underbrace{\dfrac{\partial Wco(\bar{i}(t)\,,\,\theta_m(t))}{\partial \theta_m}}_{\text{Torque }Tem(\bar{i}(t)\,,\,\theta_m(t))} + T_l(t) = J \cdot \dfrac{d\omega_m(t)}{dt} \end{cases}$$

wherein the first equation of the system is provided in a plurality, expressed by the lowercase natural index $j$, corresponding to the number n of windings and the symbols of the equations are identified as follows:

$\theta_m$ Scalar value of the angular position of the rotor

$\omega_m$ Scalar value of the rotational speed of the rotor around its axis assumed stationary in an inertial reference frame

$\bar{i}$ Vector of the n winding currents

$v_j$, $i_j$ Voltage and current of the $j^{th}$ winding (a two-terminal network) $j$ e $\{1..n\}$; They are referred to the users' convention with the current reference direction entering the winding terminal

$J$ Equivalent total moment of inertia of the rotating masses; It is referred to the rotor axis of rotation

$r_j$ Resistance of the $j^{th}$ winding (C), $j \in \{1..n\}$

$Wco(\bar{i}, \theta_m)$ Coenergy of the electromagnetic field in the overall machine space, expressed as state function of the winding currents and angular position of the rotor

$v_j$, $i_j$ Voltage and current of the $j^{th}$ winding (a two-terminal network) $j \in \{1..n\}$. They are referred to the users' convention with the current reference direction entering the winding terminal

$T_l$ Scalar value of the torque exerted by the mechanical system coupled to the electrical machined; It is referred to the rotor axis of rotation.

2. A control device (11) for controlling and/or identifying in real-time an electric machine (22) with $ks$ windings on a stator and $kr$ windings on a rotor, wherein $ks + kr = n$ and wherein either one of $ks$ and $kr$ may be zero, the control device comprising:

- at least one input (12) via which control commands are capable of being received and at least one output (14) via which control commands to a driver (21) of the electric machine (22) are capable of being output;
- machine modeling means (15) provided for modeling in real-time the behavior of the electric machine; (22) and
- decision means (16) operatively connected to the input, the output, and the machine modeling means and provided for (i) determining in real-time the control commands to be output to the driver (21) of the electric machine (22) based on input control commands and results from the real-time modeling of the behavior of the electric machine, (22) and (ii) outputting in real-time the determined control commands at the output, wherein
- the machine modeling means is provided for modeling the behavior of the electrical machine through at least one functional mapping suited for correlating sets of values of electrical and mechanical quantities and/or sets of values of their total or partial derivatives, and/or integral functions with one another, and
- said electrical and mechanical quantities comprise winding currents, winding voltages, magnetic fluxes, mechanical displacements, and/or electromagnetic torques and forces, and
- said functional mapping comprises at least one algorithm or mathematical equation based on at least one state function associated with the electromagnetic field inside the electrical machine (22) or based on at least one partial derivative of said state function, **characterized in that**
- the state function model is a model based on the coenergy associated with the electromagnetic field inside the electric machine and is described by the following equation system, or a discretized form thereof:

$$\begin{cases} \sum_{k=1}^{n} \left\{ \left[ \dfrac{\partial^2 Wco(\bar{i}(t),\theta_m(t))}{\partial i_j \partial i_k} \right] \cdot \dfrac{di_k(t)}{dt} \right\} + \dfrac{\partial^2 Wco(\bar{i}(t),\theta_m(t))}{\partial i_j \partial \theta_m} \cdot \omega_m(t) = v_j(t) - r_j \cdot i_j(t) \\[2em] J \cdot \dfrac{d\omega_m(t)}{dt} = \dfrac{\partial Wco(\bar{i}(t),\theta_m(t))}{\partial \theta_m} + T_l(t) \\[2em] \dfrac{d\theta_m(t)}{dt} = \omega_m(t) \end{cases}$$

wherein the first equation is provided in a plurality corresponding to the number n of windings and the symbols of the equations are identified as follows:

$\theta_m$ Scalar value of the angular position of the rotor

$\omega_m$ Scalar value of the rotational speed of the rotor around its axis assumed stationary in an inertial reference frame

$\bar{i}$ Vector of the $n$ winding currents

$v_j, i_j$ Voltage and current of the $j^{th}$ winding (a two-terminal network) $j \in \{1..n\}$. They are referred to the users' convention with the current reference direction entering the winding terminal

$J$ Equivalent total moment of inertia of the rotating masses. It is referred to the rotor axis of rotation

$r_j$ Resistance of the $j^{th}$ winding (C), $j \in \{1..n\}$

$Wco(\bar{i},\theta_m)$ Coenergy of the electromagnetic field in the overall machine space, expressed as state function of the winding currents and angular position of the rotor

$v_j, i_j$ Voltage and current of the $j^{th}$ winding (a two-terminal network) $j \in \{1..n\}$. They are referred to the users' convention with the current reference direction entering the winding terminal

$T_l$ Scalar value of the torque exerted by the mechanical system coupled to the electrical machine. It is referred to the rotor axis of rotation.

3. The control device of claim 1or 2 wherein the machine modeling means is capable of modeling in real-time the behavior of the electric machine (22) without requiring any mathematical transformation on physical quantities defining the domain of the state function.

4. The control device of any of claims 1-3 wherein the machine modeling means is provided with the coenergy associated with the electromagnetic field inside the electric machine (22) either numerically in a table or as an analytical function or artificial intelligence descriptor, or discretized form thereof, wherein the artificial intelligence descriptor preferably is a set of artificial neural networks and/or fuzzy inferences.

5. The control device of any of claims 1-3 wherein the control device comprises at least one input (13) via which measured or estimated quantities of the electric machine (22) are capable of being received and wherein the machine modeling means is provided to identify the coenergy associated with the electromagnetic field inside the electric machines (22) based on the measured or estimated electrical and/or mechanical quantities of the electric machine (22).

6. A driver (21) for an electric machine (22) comprising the control device (11) of any of claims 1-5.

7. An electric machine (22) provided with a driver (21) comprising the control device (11) of any of claims 1-5.

8. The electric machine of claim 7 wherein the driver (21) is integrated with the electric machine (22) to form a single body.

9. A control method for controlling an electric machine (22) with $ks$ windings on a stator and $kr$ windings on a rotor, wherein ks + kr = n and wherein either one of ks and kr may be zero, comprising the steps of:

- receiving in real-time input control commands;
- modeling in real-time the behavior of the electric machine; (22)
- determining in real-time control commands to be output to a driver (21) of the electric machine (22) based on the input control commands and results from the modeling of the behavior of the electric machine (22); and
- outputting in real-time the determined control commands to the driver (21) of the electric machine (22), wherein
- the modeling of the behavior of the electrical machine (22) is made through at least one functional mapping suited for correlating sets of values of electrical and mechanical quantities and/or sets of values of their total or partial derivatives and/or integral functions with one another, and

- said electrical and mechanical quantities comprise winding currents, winding voltages, magnetic fluxes, mechanical displacements, and/or electromagnetic torques and forces, and

- said functional mapping comprises at least one algorithm or mathematical equation based on at least one state function associated with the electromagnetic field inside the electrical machine (22) and/or based on at least one partial derivative of said state function; **characterized in that**

- the modeling is based on the coenergy associated with the electromagnetic field inside the electric machine (22) and is described by the following equation system, or a discretized form thereof:

$$\begin{cases} \frac{d}{dt}\underbrace{\left(\frac{\partial Wco(\bar{i}(t)\,,\,\theta_m(t)\,)}{\partial i_j}\right)}_{\text{Flux } \lambda_j(\bar{i}(t)\,,\,\theta_m(t)\,)} = v_j(t) - r_j \cdot i_j(t) \\[4ex] \underbrace{\frac{\partial Wco(\bar{i}(t)\,,\,\theta_m(t)\,)}{\partial \theta_m}}_{\text{Torque } Tem(\bar{i}(t)\,,\,\theta_m(t)\,)} + T_l(t) = J \cdot \frac{d\omega_m(t)}{dt} \end{cases}$$

wherein the first equation of the system is provided in a plurality, expressed by the lowercase natural index $j$, corresponding to the number n of windings and the symbols of the equations are identified as follows:

$\theta_m$ Scalar value of the angular position of the rotor

$\omega_m$ Scalar value of the rotational speed of the rotor around its axis assumed stationary in an inertial reference frame

$\bar{i}$ Vector of the n winding currents

$v_j$, $i_j$ Voltage and current of the $j^{th}$ winding (a two-terminal network) $j \in \{1..n\}$. They are referred to the users' convention with the current reference direction entering the winding terminal

$J$ Equivalent total moment of inertia of the rotating masses. It is referred to the rotor axis of rotation

$r_j$ Resistance of the $j^{th}$ winding (C), $j \in \{1..n\}$

$Wco(\bar{i}, \theta_m)$ Coenergy of the electromagnetic field in the overall machine space, expressed as state function of the winding currents and angular position of the rotor

$v_j$, $i_j$ Voltage and current of the $j^{th}$ winding (a two-terminal network) $j \in \{1..n\}$; They are referred to the users' convention with the current reference direction entering the winding terminal.

$T_l$ Scalar value of the torque exerted by the mechanical system coupled to the electrical machine. It is referred to the rotor axis of rotation.

**10.** A control method for controlling an electric machine (22) with $ks$ windings on a stator and $kr$ windings on a rotor, wherein ks + kr = n and wherein either one of ks and kr may be zero, comprising the steps of:

- receiving in real-time input control commands;
- modeling in real-time the behavior of the electric machine (22);
- determining in real-time control commands to be output to a driver (21) of the electric machine (22) based on the input control commands and results from the modeling of the behavior of the electric machine (22); and
- outputting in real-time the determined control commands to the driver (21) of the electric machine (22), wherein
- the modeling of the behavior of the electrical machine (22) is made through at least one functional mapping suited for correlating sets of values of electrical and mechanical quantities and/or sets of values of their total or partial derivatives and/or integral functions with one another, and
- said electrical and mechanical quantities comprise winding currents, winding voltages, magnetic fluxes, mechanical displacements, and/or electromagnetic torques and forces, and
- said functional mapping comprises at least one algorithm or mathematical equation based on at least one state function associated with the electromagnetic field inside the electrical machine (22) and/or based on at least one partial derivative of said state function; **characterized in that**
- the modeling is based on the coenergy associated with the electromagnetic field inside the electric machine (22) and is described by the following equation system, or a discretized form thereof:

$$\begin{cases} \displaystyle\sum_{k=1}^{n} \left\{ \left[ \frac{\partial^2 Wco(\bar{i}(t),\theta_m(t))}{\partial i_j \partial i_k} \right] \cdot \frac{di_k(t)}{dt} \right\} + \frac{\partial^2 Wco(\bar{i}(t),\theta_m(t))}{\partial i_j \partial \theta_m} \cdot \omega_m(t) = v_j(t) - r_j \cdot i_j(t) \\[4mm] J \cdot \dfrac{d\omega_m(t)}{dt} = \dfrac{\partial Wco(\bar{i}(t),\theta_m(t))}{\partial \theta_m} + T_l(t) \\[4mm] \dfrac{d\theta_m(t)}{dt} = \omega_m(t) \end{cases}$$

wherein the first equation is provided in a plurality corresponding to the number n of windings and the symbols of the equations are identified as follows:

$\theta_m$ Scalar value of the angular position of the rotor

$\omega_m$ Scalar value of the rotational speed of the rotor around its axis assumed stationary in an inertial reference frame

$\bar{i}$ Vector of the n winding currents

$v_j, i_j$ Voltage and current of the $j^{th}$ winding (a two-terminal network) $j \in \{1..n\}$. They are referred to the users' convention with the current reference direction entering the winding terminal

$J$ Equivalent total moment of inertia of the rotating masses. It is referred to the rotor axis of rotation

$r_j$ Resistance of the $j^{th}$ winding (C), $j \in \{1..n\}$

$Wco(\bar{i},\theta_m)$ Coenergy of the electromagnetic field in the overall machine space, expressed as state function of the winding currents and angular position of the rotor

$v_j, i_j$ Voltage and current of the $j^{th}$ winding (a two-terminal network) $j \in \{1..n\}$; They are referred to the users' convention with the current reference direction entering the winding terminal

$T_l$ Scalar value of the torque exerted by the mechanical system coupled to the electrical machine. It is referred to the rotor axis of rotation

11. The method of claim 9 or 10 wherein the coenergy associated with the electromagnetic field inside the electric machine (22) is provided either numerically from simulations or as an analytical function, or discretized form thereof.

**Patentansprüche**

1. Steuervorrichtung (11) zum Steuern und/oder Identifizieren einer elektrischen Maschine (22) mit *ks* Wicklungen auf einem Stator und *kr* Wicklungen auf einem Rotor in Echtzeit, wobei *ks* + *kr* = n und wobei *ks* oder *kr* null sein kann, wobei die Steuervorrichtung umfasst:

- mindestens einen Eingang (12), über den Steuerbefehle empfangen werden können, und mindestens einen Ausgang (14), über den Steuerbefehle an einen Treiber (21) der elektrischen Maschine ausgegeben werden können;
- Maschinenmodellierungsmittel (15), die zum Modellieren des Verhaltens der elektrischen Maschine in Echtzeit vorgesehen sind; und
- Entscheidungsmittel (16), die betriebstechnisch mit dem Eingang, dem Ausgang und den Maschinenmodellierungsmitteln verbunden sind und (i) zum Bestimmen der Steuerbefehle, die an den Treiber (21) der elektrischen Maschine (22) ausgegeben werden sollen, in Echtzeit basierend auf Eingangssteuerbefehlen und Ergebnissen aus der Echtzeit-Modellierung des Verhaltens der elektrischen Maschine (22), und (ii) zum Ausgeben der bestimmten Steuerbefehle an dem Ausgang in Echtzeit, wobei
- die Maschinenmodellierungsmittel zum Modellieren des Verhaltens der elektrischen Maschine (22) durch mindestens eine funktionelle Zuordnung vorgesehen sind, die zum Korrelieren von Mengen von Werten von elektrischen und mechanischen Größen und/oder Mengen von Werten ihrer totalen oder partiellen Ableitungen und/oder Integralfunktionen miteinander geeignet ist, und
- die elektrischen und mechanischen Größen Wicklungsstromstärken, Wicklungsspannungen, magnetische Flüsse, mechanische Verschiebungen und/oder elektromagnetische Drehmomente und Kräfte umfassen; und
- die funktionelle Zuordnung mindestens einen Algorithmus und/oder eine mathematische Gleichung basierend auf mindestens einer Zustandsfunktion, die dem elektromagnetischen Feld im Inneren der elektrischen Maschine (22) zugeordnet ist, und/oder basierend auf mindestens einer partiellen Ableitung der Zustandsfunktion umfasst, **dadurch gekennzeichnet, dass**

- das Zustandsfunktionsmodell ein Modell ist, das auf der Koenergie basiert, die dem elektromagnetischen Feld im Inneren der elektrischen Maschine (22) zugeordnet ist, und durch das folgende Gleichungssystem oder eine diskretisierte Form davon beschrieben ist:

$$\begin{cases} \frac{d}{dt}\left( \underbrace{\frac{\partial Wco(\bar{i}(t),\,\theta_m(t))}{\partial i_j}}_{\text{Flux } \lambda_j(\bar{i}(t),\,\theta_m(t))} \right) = v_j(t) - r_j \cdot i_j(t) \\[4ex] \underbrace{\frac{\partial Wco(\bar{i}(t),\,\theta_m(t))}{\partial \theta_m}}_{\text{Torque } Tem(\bar{i}(t),\,\theta_m(t))} + T_l(t) = J \cdot \frac{d\omega_m(t)}{dt} \end{cases}$$

wobei die erste Gleichung des Systems in einer Mehrzahl bereitgestellt ist, die durch den kleingeschriebenen natürlichen Index j ausgedrückt ist und der Anzahl n von Wicklungen entspricht, und die Symbole der Gleichungen wie folgt bezeichnet sind:

$\theta_m$ Skalarwert der Winkelposition des Rotors

$\omega_m$ Skalarwert der Winkelgeschwindigkeit des Rotors um seine Achse, die in einem Referenz-Inertialsystem als stationär angenommen ist

$\vec{i}$ Vektor der n Wicklungsströme

$v_j$, $i_j$ Spannung und Stromstärke der *j*-ten Wicklung (einem Zwei-Anschluss-Netz) $j \in \{1..n\}$; sie beziehen sich auf die Anwenderkonvention, mit der die Stromreferenzrichtung in den Wicklungsanschluss eintritt

*J* Äquivalentes Gesamtträgheitsmoment der sich drehenden Massen; es bezieht sich auf die Rotorachse der Drehung

$r_j$ Widerstand der *j*-ten Wicklung (C); $j \in \{1..n\}$ $W_{co}(\vec{i}, \theta_m)$ Koenergie des elektromagnetischen Felds in dem gesamten Maschinenraum, die als eine Zustandsfunktion der Wicklungsströme und der Winkelposition des Rotors ausgedrückt ist $v_j$, $i_j$ Spannung und Stromstärke der *j*-ten Wicklung (einem Zwei-Anschluss-Netz) $j \in \{1..n\}$; sie beziehen sich auf die Anwenderkonvention, mit der die Stromreferenzrichtung in den Wicklungsanschluss eintritt

$T_l$ Skalarwert des Drehmoments, das durch das mechanische System, das mit der elektrischen Maschine gekoppelt ist, ausgeübt wird; er bezieht sich auf die Rotorachse der Drehung.

2. Steuervorrichtung (11) zum Steuern und/oder Identifizieren einer elektrischen Maschine (22) mit *ks* Wicklungen auf einem Stator und *kr* Wicklungen auf einem Rotor in Echtzeit, wobei *ks* + *kr* = n und wobei *ks* oder *kr* null sein kann, wobei die Steuervorrichtung umfasst:

- mindestens einen Eingang (12), über den Steuerbefehle empfangen werden können, und mindestens einen Ausgang (14), über den Steuerbefehle an einen Treiber (21) der elektrischen Maschine (22) ausgegeben werden können;

- Maschinenmodellierungsmittel (15), die zum Modellieren des Verhaltens der elektrischen Maschine (22) in Echtzeit vorgesehen sind; und

- Entscheidungsmittel (16), die betriebstechnisch mit dem Eingang, dem Ausgang und den Maschinenmodellierungsmitteln verbunden sind und (i) zum Bestimmen der Steuerbefehle, die an den Treiber (21) der elektrischen Maschine (22) ausgegeben werden sollen, in Echtzeit basierend auf Eingangssteuerbefehlen und Ergebnissen aus der Echtzeit-Modellierung des Verhaltens der elektrischen Maschine (22), und (ii) zum Ausgeben der bestimmten Steuerbefehle an dem Ausgang in Echtzeit, wobei

- die Maschinenmodellierungsmittel zum Modellieren des Verhaltens der elektrischen Maschine durch mindestens eine funktionelle Zuordnung vorgesehen sind, die zum Korrelieren von Mengen von Werten von elektrischen und mechanischen Größen und/oder Mengen von Werten ihrer totalen oder partiellen Ableitungen und/oder Integralfunktionen miteinander geeignet ist,

und

- die elektrischen und mechanischen Größen Wicklungsstromstärken, Wicklungsspannungen, magnetische Flüsse, mechanische Verschiebungen und/oder elektromagnetische Drehmomente und Kräfte umfassen; und
- die funktionelle Zuordnung mindestens einen Algorithmus und/oder eine mathematische Gleichung basierend auf mindestens einer Zustandsfunktion, die dem elektromagnetischen Feld im Inneren der elektrischen Maschine (22) zugeordnet ist, und/oder basierend auf mindestens einer partiellen Ableitung der Zustandsfunktion umfasst, **dadurch gekennzeichnet, dass**
- das Zustandsfunktionsmodell ein Modell ist, das auf der Koenergie basiert, die dem elektromagnetischen Feld im Inneren der elektrischen Maschine (22) zugeordnet ist, und durch das folgende Gleichungssystem oder eine diskretisierte Form davon beschrieben ist:

$$
\begin{cases}
\sum_{k=1}^{n} \left\{ \left[ \dfrac{\partial^2 Wco(\vec{i}(t), \theta_m(t))}{\partial i_j \partial i_k} \right] \cdot \dfrac{di_k(t)}{dt} \right\} + \dfrac{\partial^2 Wco(\vec{i}(t), \theta_m(t))}{\partial i_j \partial \theta_m} \cdot \omega_m(t) = v_j(t) - r_j \cdot i_j(t) \\[3ex]
J \cdot \dfrac{d\omega_m(t)}{dt} = \dfrac{\partial Wco(\vec{i}(t), \theta_m(t))}{\partial \theta_m} + T_l(t) \\[3ex]
\dfrac{d\theta_m(t)}{dt} = \omega_m(t)
\end{cases}
$$

wobei die erste Gleichung des Systems in einer Mehrzahl bereitgestellt ist, die durch den kleingeschriebenen natürlichen Index $j$ ausgedrückt ist und der Anzahl n von Wicklungen entspricht, und die Symbole der Gleichungen wie folgt bezeichnet sind:

$\theta_m$ Skalarwert der Winkelposition des Rotors
$\omega_m$ Skalarwert der Winkelgeschwindigkeit des Rotors um seine Achse, die in einem Referenz-Inertialsystem als stationär angenommen ist
$\vec{i}$ Vektor der n Wicklungsströme
$v_j$, $i_j$ Spannung und Stromstärke der $j$-ten Wicklung (einem Zwei-Anschluss-Netz) $j \in \{1..n\}$; sie beziehen sich auf die Anwenderkonvention, mit der die Stromreferenzrichtung in den Wicklungsanschluss eintritt
$J$ Äquivalentes Gesamtträgheitsmoment der sich drehenden Massen; es bezieht sich auf die Rotorachse der Drehung
$r_j$ Widerstand der $j$-ten Wicklung (C); $j \in \{1..n\}$
$W_{co}(\vec{i}, \theta_m)$ Koenergie des elektromagnetischen Felds in dem gesamten Maschinenraum, die als eine Zustandsfunktion der Wicklungsströme und der Winkelposition des Rotors ausgedrückt ist
$v_j$, $i_j$ Spannung und Stromstärke der $j$-ten Wicklung (einem Zwei-Anschluss-Netz) $j \in \{1..n\}$; sie beziehen sich auf die Anwenderkonvention, mit der die Stromreferenzrichtung in den Wicklungsanschluss eintritt
$T_l$ Skalarwert des Drehmoments, das durch das mechanische System, das mit der elektrischen Maschine gekoppelt ist, ausgeübt wird; er bezieht sich auf die Rotorachse der Drehung.

3. Steuervorrichtung nach Anspruch 1 oder 2, wobei die Maschinenmodellierungsmittel dazu in der Lage sind, das Verhalten der elektrischen Maschine (22) in Echtzeit zu modellieren, ohne eine mathematische Transformation an physikalischen Größen, die den Bereich der Zustandsfunktion definieren, zu benötigen.

4. Steuervorrichtung nach einem der Ansprüche 1 bis 3, wobei die Maschinenmodellierungsmittel mit der Koenergie, die dem elektromagnetischen Feld im Inneren der elektrischen Maschine (22) zugeordnet ist, entweder numerisch in einer Tabelle oder als analytische Funktion oder KI-Deskriptor (KI für künstliche Intelligenz) oder diskretisierte Form davon ausgestattet sind, wobei der KI-Deskriptor vorzugsweise ein Satz von künstlichen neuronalen Netzen und/oder Fuzzy-Inferenzen ist.

5. Steuervorrichtung nach einem der Ansprüche 1-3, wobei die Steuervorrichtung mindestens einen Eingang (13) umfasst, über den die gemessenen oder geschätzten Größen der elektrischen Maschine (22) empfangen werden können, und wobei die Maschinenmodellierungsmittel bereitgestellt sind, um die Koenergie, die dem elektromagnetischen Feld im Inneren der elektrischen Maschine (22) zugeordnet ist, auf der Basis der gemessenen oder geschätzten elektrischen und/oder mechanischen Größen der elektrischen Maschine (22) zu identifizieren.

6. Treiber (21) für eine elektrische Maschine (22), der die Steuervorrichtung (11) nach einem der Ansprüche 1-5 umfasst.

7. Elektrische Maschine (22), die mit einem Treiber (21) versehen ist, der die Steuervorrichtung (11) nach einem der Ansprüche 1-5 umfasst.

8. Elektrische Maschine nach Anspruch 7, wobei der Treiber (21) in die elektrische Maschine (22) integriert ist, um einen einzelnen Körper zu bilden.

9. Steuerverfahren zum Steuern einer elektrischen Maschine (22) mit *ks* Wicklungen auf einem Stator und *kr* Wicklungen auf einem Rotor, wobei *ks* + *kr* = n und wobei *ks* oder *kr* null sein kann, das die folgenden Schritte umfasst:

   - Empfangen von eingegebenen Steuerbefehlen in Echtzeit;
   - Modellieren des Verhaltens der elektrischen Maschine (22) in Echtzeit; und
   - Bestimmen von Steuerbefehlen, die an einen Treiber (21) der elektrischen Maschine (22) ausgegeben werden sollen, in Echtzeit basierend auf den eingegebenen Steuerbefehlen und Ergebnissen aus dem Modellieren des Verhaltens der elektrischen Maschine (22), und
   - Ausgeben der bestimmten Steuerbefehle an den Treiber (21) der elektrischen Maschine (22), wobei
   - das Modellieren des Verhaltens der elektrischen Maschine (22) durch mindestens eine funktionelle Zuordnung geschieht, die zum Korrelieren von Mengen von Werten von elektrischen und mechanischen Größen und/oder Mengen von Werten ihrer totalen oder partiellen Ableitungen und/oder Integralfunktionen miteinander geeignet ist, und
   - die elektrischen und mechanischen Größen Wicklungsstromstärken, Wicklungsspannungen, magnetische Flüsse, mechanische Verschiebungen und/oder elektromagnetische Drehmomente und Kräfte umfassen; und
   - die funktionelle Zuordnung mindestens einen Algorithmus und/oder eine mathematische Gleichung basierend auf mindestens einer Zustandsfunktion, die dem elektromagnetischen Feld im Inneren der elektrischen Maschine (22) zugeordnet ist, und/oder basierend auf mindestens einer partiellen Ableitung der Zustandsfunktion umfasst, **dadurch gekennzeichnet, dass**
   - das Modellieren auf der Koenergie basiert, die dem elektromagnetischen Feld im Inneren der elektrischen Maschine (22) zugeordnet ist, und durch das folgende Gleichungssystem oder eine diskretisierte Form davon beschrieben ist:

$$\begin{cases} \frac{d}{dt}\underbrace{\left( \frac{\partial Wco(\bar{i}(t)\,,\,\theta_m(t))}{\partial i_j} \right)}_{\text{Flux } \lambda_j(\bar{i}(t)\,,\,\theta_m(t))} = v_j(t) - r_j \cdot i_j(t) \\[4ex] \underbrace{\frac{\partial Wco(\bar{i}(t)\,,\,\theta_m(t))}{\partial \theta_m}}_{\text{Torque } Tem(\bar{i}(t)\,,\,\theta_m(t))} + T_l(t) = J \cdot \frac{d\omega_m(t)}{dt} \end{cases}$$

wobei die erste Gleichung in einer Mehrzahl bereitgestellt ist, die der Anzahl n von Wicklungen entspricht, und die Symbole der Gleichungen wie folgt bezeichnet sind:

$\theta_m$ Skalarwert der Winkelposition des Rotors $\omega_m$ Skalarwert der Winkelgeschwindigkeit des Rotors um seine Achse, die in einem Referenz-Inertialsystem als stationär angenommen ist $\vec{i}$ Vektor der n Wicklungsströme

$v_j$, $i_j$ Spannung und Stromstärke der *j*-ten Wicklung (einem Zwei-Anschluss-Netz) $j \in \{1..n\}$; sie beziehen sich auf die Anwenderkonvention, mit der die Stromreferenzrichtung in den Wicklungsanschluss eintritt

$J$ Äquivalentes Gesamtträgheitsmoment der sich drehenden Massen; es bezieht sich auf die Rotorachse der Drehung

$r_j$ Widerstand der *j*-ten Wicklung (C); $j \in \{1..n\}$

$W_{co}(\vec{i}, \theta_m)$ Koenergie des elektromagnetischen Felds in dem gesamten Maschinenraum, die als eine Zustandsfunktion der Wicklungsströme und der Winkelposition des Rotors ausgedrückt ist

$v_j$, $i_j$ Spannung und Stromstärke der *j*-ten Wicklung (einem Zwei-Anschluss-Netz) $j \in \{1..n\}$; sie beziehen sich auf die Anwenderkonvention, mit der die Stromreferenzrichtung in den Wicklungsanschluss eintritt

$T_l$ Skalarwert des Drehmoments, das durch das mechanische System, das mit der elektrischen Maschine gekoppelt ist, ausgeübt wird; er bezieht sich auf die Rotorachse der Drehung.

10. Steuerverfahren zum Steuern einer elektrischen Maschine (22) mit *ks* Wicklungen auf einem Stator und *kr* Wicklungen auf einem Rotor, wobei *ks* + *kr* = n und wobei *ks* oder *kr* null sein kann, das die folgenden Schritte umfasst:

- Empfangen von eingegebenen Steuerbefehlen in Echtzeit;
- Modellieren des Verhaltens der elektrischen Maschine (22) in Echtzeit; und
- Bestimmen von Steuerbefehlen, die an einen Treiber (21) der elektrischen Maschine (22) ausgegeben werden sollen, in Echtzeit basierend auf den eingegebenen Steuerbefehlen und Ergebnissen aus dem Modellieren des Verhaltens der elektrischen Maschine (22), und
- Ausgeben der bestimmten Steuerbefehle an den Treiber (21) der elektrischen Maschine (22), wobei
- das Modellieren des Verhaltens der elektrischen Maschine (22) durch mindestens eine funktionelle Zuordnung geschieht, die zum Korrelieren von Mengen von Werten von elektrischen und mechanischen Größen und/oder Mengen von Werten ihrer totalen oder partiellen Ableitungen und/oder Integralfunktionen miteinander geeignet ist, und
- die elektrischen und mechanischen Größen Wicklungsstromstärken, Wicklungsspannungen, magnetische Flüsse, mechanische Verschiebungen und/oder elektromagnetische Drehmomente und Kräfte umfassen; und
- die funktionelle Zuordnung mindestens einen Algorithmus und/oder eine mathematische Gleichung basierend auf mindestens einer Zustandsfunktion, die dem elektromagnetischen Feld im Inneren der elektrischen Maschine (22) zugeordnet ist, und/oder basierend auf mindestens einer partiellen Ableitung der Zustandsfunktion umfasst, **dadurch gekennzeichnet, dass**
- das Modellieren auf der Koenergie basiert, die dem elektromagnetischen Feld im Inneren der elektrischen Maschine (22) zugeordnet ist, und durch das folgende Gleichungssystem oder eine diskretisierte Form davon beschrieben ist:

$$\begin{cases} \sum_{k=1}^{n} \left\{ \left[ \frac{\partial^2 Wco(\bar{i}(t),\theta_m(t))}{\partial i_j \partial i_k} \right] \cdot \frac{di_k(t)}{dt} \right\} + \frac{\partial^2 Wco(\bar{i}(t),\theta_m(t))}{\partial i_j \partial \theta_m} \cdot \omega_m(t) = v_j(t) - r_j \cdot i_j(t) \\ \\ J \cdot \frac{d\omega_m(t)}{dt} = \frac{\partial Wco(\bar{i}(t),\theta_m(t))}{\partial \theta_m} + T_l(t) \\ \\ \frac{d\theta_m(t)}{dt} = \omega_m(t) \end{cases}$$

wobei die erste Gleichung in einer Mehrzahl bereitgestellt ist, die der Anzahl n von Wicklungen entspricht, und die Symbole der Gleichungen wie folgt bezeichnet sind:

$\theta_m$ Skalarwert der Winkelposition des Rotors
$\omega_m$ Skalarwert der Winkelgeschwindigkeit des Rotors um seine Achse, die in einem Referenz-Inertialsystem als stationär angenommen ist
$\vec{i}$ Vektor der n Wicklungsströme
$v_j, i_j$ Spannung und Stromstärke der *j*-ten Wicklung (einem Zwei-Anschluss-Netz); $j \in \{1..n\}$; sie beziehen sich auf die Anwenderkonvention, mit der die Stromreferenzrichtung in den Wicklungsanschluss eintritt
$J$ Äquivalentes Gesamtträgheitsmoment der sich drehenden Massen; es bezieht sich auf die Rotorachse der Drehung
$r_j$ Widerstand der *j*-ten Wicklung (C); $j \in \{1..n\}$
$W_{co}(\vec{i}, \theta_m)$ Koenergie des elektromagnetischen Felds in dem gesamten Maschinenraum, die als eine Zustandsfunktion der Wicklungsströme und der Winkelposition des Rotors ausgedrückt ist
$v_j, i_j$ Spannung und Stromstärke der *j*-ten Wicklung (einem Zwei-Anschluss-Netz); $j \in \{1..n\}$; sie beziehen sich auf die Anwenderkonvention, mit der die Stromreferenzrichtung in den Wicklungsanschluss eintritt
$T_l$ Skalarwert des Drehmoments, das durch das mechanische System, das mit der elektrischen Maschine gekoppelt ist, ausgeübt wird; er bezieht sich auf die Rotorachse der Drehung.

11. Verfahren nach Anspruch 9 oder 10, wobei die Koenergie, die dem elektromagnetischen Feld im Inneren der elektrischen Maschine (22) zugeordnet ist, entweder numerisch aus Simulationen oder als eine analytische Funktion oder eine diskretisierte Form davon bereitgestellt ist.

**Revendications**

1. Dispositif de commande (11) pour commander et/ou identifier en temps réel une machine électrique (22) dotée de *ks* enroulements sur un stator et de *kr* enroulements sur un rotor, *ks* + *kr* = n et *ks* ou bien *kr* pouvant être nul, le dispositif de commande comprenant :

   - au moins une entrée (12) par laquelle des instructions de commande sont susceptibles d'être reçues et au moins une sortie (14) par laquelle des instructions de commande sont susceptibles d'être fournies à un module de pilotage (21) de la machine électrique ;
   - un moyen de modélisation de machine (15) servant à effectuer une modélisation en temps réel du comportement de la machine électrique ; et
   - un moyen de décision (16) relié fonctionnellement à l'entrée, à la sortie et au moyen de modélisation de machine et servant à (i) déterminer en temps réel les instructions de commande à fournir au module de pilotage (21) de la machine électrique (22) sur la base d'instructions de commande d'entrée et de résultats de la modélisation en temps réel du comportement de la machine électrique (22), et (ii) fournir en temps réel les instructions de commande déterminées au niveau de la sortie, dispositif de commande dans lequel
   - le moyen de modélisation de machine sert à effectuer une modélisation du comportement de la machine électrique (22) à l'aide d'au moins un mappage fonctionnel adapté à corréler des ensembles de valeurs de grandeurs électriques et mécaniques et/ou des ensembles de valeurs de leurs dérivées totales ou partielles et/ou des fonctions intégrales les uns avec les autres, et
   - lesdites grandeurs électriques et mécaniques comprennent des courants d'enroulement, des tensions d'enroulement, des flux magnétiques, des déplacements mécaniques et/ou des couples et forces électromagnétiques, et
   - ledit mappage fonctionnel comprend au moins un algorithme ou une équation mathématique basé(e) sur au moins une fonction d'état associée au champ électromagnétique au sein de la machine électrique (22) ou basé(e) sur au moins une dérivée partielle de ladite fonction d'état, le dispositif de commande étant **caractérisé en ce que**
   - le modèle de la fonction d'état est un modèle basé sur la coénergie associée au champ électromagnétique au sein de la machine électrique (22) et est décrit par le système d'équations qui suit, ou une forme discrétisée de celui-ci :

$$\begin{cases} \underbrace{\frac{d}{dt}\left(\frac{\partial Wco(\bar{i}(t)\,,\,\theta_m(t))}{\partial i_j}\right)}_{\text{Flux } \lambda_j(\bar{i}(t)\,,\,\theta_m(t))} = v_j(t) - r_j \cdot i_j(t) \\[2em] \underbrace{\frac{\partial Wco(\bar{i}(t)\,,\,\theta_m(t))}{\partial \theta_m}}_{\text{Couple } Tem(\bar{i}(t)\,,\,\theta_m(t))} + T_l(t) = J \cdot \frac{d\omega_m(t)}{dt} \end{cases}$$

où la première équation du système constitue une pluralité, exprimée par l'indice naturel minuscule j, correspondant au nombre n d'enroulements, et les symboles des équations sont identifiés comme suit :

   $\theta_m$ Valeur scalaire de la position angulaire du rotor
   $\omega_m$ Valeur scalaire de la vitesse de rotation du rotor sur son axe supposé fixe dans un référentiel inertiel
   $\vec{i}$ Vecteur des n courants d'enroulement
   $v_j$, $i_j$ Tension et courant du *j-ème* enroulement (réseau à deux bornes) j ∈ {1..*n*}; ils sont rapportés à la convention de l'utilisateur avec le sens de référence du courant entrant dans la borne d'enroulement
   *J* Moment total d'inertie équivalent des masses en rotation ; il est rapporté à l'axe de rotation du rotor
   $r_j$ Résistance du *j-ème* enroulement (C), j ∈ {1..*n*}
   $Wco(\vec{i}, \theta_m)$ Coénergie du champ électromagnétique dans l'espace global de la machine, exprimée comme une fonction d'état des courants d'enroulement et de la position angulaire du rotor

$v_j$, $i_j$ Tension et courant du *j-ème* enroulement (réseau à deux bornes) j $\in$ {1..*n*} ; ils sont rapportés à la convention de l'utilisateur avec le sens de référence du courant entrant dans la borne d'enroulement

$T_l$ Valeur scalaire du couple exercé par le système mécanique couplé à la machine électrique ; elle est rapportée à l'axe de rotation du rotor.

2. Dispositif de commande (11) pour commander et/ou identifier en temps réel une machine électrique (22) dotée de *ks* enroulements sur un stator et de *kr* enroulements sur un rotor, *ks* + *kr* = *n* et *ks* ou bien *kr* pouvant être nul, le dispositif de commande comprenant :

- au moins une entrée (12) par laquelle des instructions de commande sont susceptibles d'être reçues et au moins une sortie (14) par laquelle des instructions de commande sont susceptibles d'être fournies à un module de pilotage (21) de la machine électrique (22) ;
- un moyen de modélisation de machine (15) servant à effectuer une modélisation en temps réel du comportement de la machine électrique (22) ; et
- un moyen de décision (16) relié fonctionnellement à l'entrée, à la sortie et au moyen de modélisation de machine et servant à (i) déterminer en temps réel les instructions de commande à fournir au module de pilotage (21) de la machine électrique (22) sur la base d'instructions de commande d'entrée et de résultats de la modélisation en temps réel du comportement de la machine électrique (22), et (ii) fournir en temps réel les instructions de commande déterminées au niveau de la sortie, dispositif de commande dans lequel
- le moyen de modélisation de machine sert à effectuer une modélisation du comportement de la machine électrique à l'aide d'au moins un mappage fonctionnel adapté à corréler des ensembles de valeurs de grandeurs électriques et mécaniques et/ou des ensembles de valeurs de leurs dérivées totales ou partielles et/ou des fonctions intégrales les uns avec les autres, et
- lesdites grandeurs électriques et mécaniques comprennent des courants d'enroulement, des tensions d'enroulement, des flux magnétiques, des déplacements mécaniques et/ou des couples et forces électromagnétiques, et
- ledit mappage fonctionnel comprend au moins un algorithme ou une équation mathématique basé(e) sur au moins une fonction d'état associée au champ électromagnétique au sein de la machine électrique (22) ou basé(e) sur au moins une dérivée partielle de ladite fonction d'état, le dispositif de commande étant **caractérisé en ce que**
- le modèle de la fonction d'état est un modèle basé sur la coénergie associée au champ électromagnétique au sein de la machine électrique et est décrit par le système d'équations qui suit, ou une forme discrétisée de celui-ci :

$$
\begin{cases}
\sum_{k=1}^{n} \left\{ \left[ \frac{\partial^2 Wco(\bar{i}(t),\theta_m(t))}{\partial i_j \partial i_k} \right] \cdot \frac{di_k(t)}{dt} \right\} + \frac{\partial^2 Wco(\bar{i}(t),\theta_m(t))}{\partial i_j \partial \theta_m} \cdot \omega_m(t) = v_j(t) - r_j \cdot i_j(t) \\
J \cdot \frac{d\omega_m(t)}{dt} = \frac{\partial Wco(\bar{i}(t),\theta_m(t))}{\partial \theta_m} + T_l(t) \\
\frac{d\theta_m(t)}{dt} = \omega_m(t)
\end{cases}
$$

où la première équation constitue une pluralité correspondant au nombre n d'enroulements, et les symboles des équations sont identifiés comme suit :

$\theta_m$ Valeur scalaire de la position angulaire du rotor

$\omega_m$ Valeur scalaire de la vitesse de rotation du rotor sur son axe supposé fixe dans un référentiel inertiel

$\bar{i}$ Vecteur des *n* courants d'enroulement

$v_j$, $i_j$ Tension et courant du *j-ème* enroulement (réseau à deux bornes) $j \in$ {1..n} ; ils sont rapportés à la convention de l'utilisateur avec le sens de référence du courant entrant dans la borne d'enroulement

$J$ Moment total d'inertie équivalent des masses en rotation ; il est rapporté à l'axe de rotation du rotor

$r_j$ Résistance du *j-ème* enroulement (C), $j \in$ {1..*n*}

$Wco(\bar{i},\theta_m)$ Coénergie du champ électromagnétique dans l'espace global de la machine, exprimée comme une fonction d'état des courants d'enroulement et de la position angulaire du rotor

$v_j$, $i_j$ Tension et courant du *j-ème* enroulement (réseau à deux bornes) $j \in$ {1..*n*} ; ils sont rapportés à la convention de l'utilisateur avec le sens de référence du courant entrant dans la borne d'enroulement

$T_i$ Valeur scalaire du couple exercé par le système mécanique couplé à la machine électrique ; elle est rapportée à l'axe de rotation du rotor.

3. Dispositif de commande selon la revendication 1 ou 2, dans lequel le moyen de modélisation de machine est susceptible d'effectuer une modélisation en temps réel du comportement de la machine électrique (22) sans recourir à aucune transformation mathématique sur des grandeurs physiques définissant le domaine de la fonction d'état .

4. Dispositif de commande selon l'une quelconque des revendications 1 à 3, dans lequel le moyen de modélisation de machine est pourvu de la coénergie associée au champ électromagnétique au sein de la machine électrique (22) soit numériquement sous forme tabulaire, soit sous forme d'une fonction analytique ou d'un descripteur d'intelligence artificielle, ou d'une forme discrétisée de ceux-ci, lequel descripteur d'intelligence artificielle est de préférence un ensemble de réseaux de neurones artificiels et/ou d'inférences floues.

5. Dispositif de commande selon l'une quelconque des revendications 1 à 3, lequel dispositif de commande comprend au moins une entrée (13) par laquelle des grandeurs mesurées ou estimées de la machine électrique (22) sont susceptibles d'être reçues, et dans lequel le moyen de modélisation de machine sert à identifier la coénergie associée au champ électromagnétique au sein de la machine électrique (22) sur la base des grandeurs électriques et/ou mécaniques mesurées ou estimées de la machine électrique (22).

6. Module de pilotage (21) pour une machine électrique (22), comprenant le dispositif de commande (11) selon l'une quelconque des revendications 1 à 5.

7. Machine électrique (22) pourvue d'un module de pilotage (21) comprenant le dispositif de commande (11) selon l'une quelconque des revendications 1 à 5.

8. Machine électrique selon la revendication 7, dans laquelle le module de pilotage (21) est intégré à la machine électrique (22) pour former une structure monobloc.

9. Procédé de commande pour commander une machine électrique (22) dotée de $ks$ enroulements sur un stator et de $kr$ enroulements sur un rotor, $ks + kr$ = n et $ks$ ou bien $kr$ pouvant être nul, le procédé comprenant les étapes suivantes :

- la réception en temps réel d'instructions de commande d'entrée ;
- la modélisation en temps réel du comportement de la machine électrique (22) ;
- la détermination en temps réel d'instructions de commande à fournir à un module de pilotage (21) de la machine électrique (22) sur la base des instructions de commande d'entrée et de résultats de la modélisation du comportement de la machine électrique (22) ; et
- la fourniture en temps réel des instructions de commande déterminées au module de pilotage (21) de la machine électrique (22), procédé dans lequel
- la modélisation du comportement de la machine électrique (22) fait appel à au moins un mappage fonctionnel adapté à corréler des ensembles de valeurs de grandeurs électriques et mécaniques et/ou des ensembles de valeurs de leurs dérivées totales ou partielles et/ou des fonctions intégrales les uns avec les autres, et
- lesdites grandeurs électriques et mécaniques comprennent des courants d'enroulement, des tensions d'enroulement, des flux magnétiques, des déplacements mécaniques et/ou des couples et forces électromagnétiques, et
- ledit mappage fonctionnel comprend au moins un algorithme ou une équation mathématique basé(e) sur au moins une fonction d'état associée au champ électromagnétique au sein de la machine électrique (22) et/ou basé (e) sur au moins une dérivée partielle de ladite fonction d'état ; le procédé étant **caractérisé en ce que**
- la modélisation est basée sur la coénergie associée au champ électromagnétique au sein de la machine électrique (22) et est décrite par le système d'équations qui suit, ou une forme discrétisée de celui-ci :

$$\begin{cases} \dfrac{d}{dt}\underbrace{\left(\dfrac{\partial Wco(\bar{i}(t),\theta_m(t))}{\partial i_j}\right)}_{\text{Flux } \lambda_j(\bar{i}(t),\theta_m(t))} = v_j(t) - r_j \cdot i_j(t) \\[4mm] \underbrace{\dfrac{\partial Wco(\bar{i}(t),\theta_m(t))}{\partial \theta_m}}_{\text{Couple } Tem(\bar{i}(t),\theta_m(t))} + T_l(t) = J \cdot \dfrac{d\omega_m(t)}{dt} \end{cases}$$

où la première équation du système constitue une pluralité, exprimée par l'indice naturel minuscule j, correspondant au nombre n d'enroulements, et les symboles des équations sont identifiés comme suit :

$\theta_m$ Valeur scalaire de la position angulaire du rotor

$\omega_m$ Valeur scalaire de la vitesse de rotation du rotor sur son axe supposé fixe dans un référentiel inertiel

$\bar{i}$ Vecteur des n courants d'enroulement

$v_j$, $i_j$ Tension et courant du *j-ème* enroulement (réseau à deux bornes) $j \in \{1..n\}$ ; ils sont rapportés à la convention de l'utilisateur avec le sens de référence du courant entrant dans la borne d'enroulement

$J$ Moment total d'inertie équivalent des masses en rotation ; il est rapporté à l'axe de rotation du rotor

$r_j$ Résistance du *j-ème* enroulement (C), $j \in \{1..n\}$

$Wco(\bar{i},\theta_m)$ Coénergie du champ électromagnétique dans l'espace global de la machine, exprimée comme une fonction d'état des courants d'enroulement et de la position angulaire du rotor

$v_j$, $i_j$ Tension et courant du *j-ème* enroulement (réseau à deux bornes) $j \in \{1..n\}$ ; ils sont rapportés à la convention de l'utilisateur avec le sens de référence du courant entrant dans la borne d'enroulement

$T_l$ Valeur scalaire du couple exercé par le système mécanique couplé à la machine électrique ; elle est rapportée à l'axe de rotation du rotor.

**10.** Procédé de commande pour commander une machine électrique (22) dotée de *ks* enroulements sur un stator et de *kr* enroulements sur un rotor, *ks* + *kr* = n et *ks* ou bien *kr* pouvant être nul, le procédé comprenant les étapes suivantes :

- la réception en temps réel d'instructions de commande d'entrée ;
- la modélisation en temps réel du comportement de la machine électrique (22) ;
- la détermination en temps réel d'instructions de commande à fournir à un module de pilotage (21) de la machine électrique (22) sur la base des instructions de commande d'entrée et de résultats de la modélisation du comportement de la machine électrique (22) ; et
- la fourniture en temps réel des instructions de commande déterminées au module de pilotage (21) de la machine électrique (22), procédé dans lequel
- la modélisation du comportement de la machine électrique (22) fait appel à au moins un mappage fonctionnel adapté à corréler des ensembles de valeurs de grandeurs électriques et mécaniques et/ou des ensembles de valeurs de leurs dérivées totales ou partielles et/ou des fonctions intégrales les uns avec les autres, et
- lesdites grandeurs électriques et mécaniques comprennent des courants d'enroulement, des tensions d'enroulement, des flux magnétiques, des déplacements mécaniques et/ou des couples et forces électromagnétiques, et
- ledit mappage fonctionnel comprend au moins un algorithme ou une équation mathématique basé(e) sur au moins une fonction d'état associée au champ électromagnétique au sein de la machine électrique (22) et/ou basé(e) sur au moins une dérivée partielle de ladite fonction d'état ; le procédé étant **caractérisé en ce que**
- la modélisation est basée sur la coénergie associée au champ électromagnétique au sein de la machine électrique (22) et est décrite par le système d'équations qui suit, ou une forme discrétisée de celui-ci :

$$
\begin{cases}
\displaystyle\sum_{k=1}^{n}\left\{\left[\frac{\partial^2 Wco(\bar{i}(t),\theta_m(t))}{\partial i_j \partial i_k}\right]\cdot\frac{di_k(t)}{dt}\right\}+\frac{\partial^2 Wco(\bar{i}(t),\theta_m(t))}{\partial i_j \partial \theta_m}\cdot\omega_m(t)=v_j(t)-r_j\cdot i_j(t)\\[3mm]
J\cdot\dfrac{d\omega_m(t)}{dt}=\dfrac{\partial Wco(\bar{i}(t),\theta_m(t))}{\partial\theta_m}+T_l(t)\\[3mm]
\dfrac{d\theta_m(t)}{dt}=\omega_m(t)
\end{cases}
$$

où la première équation constitue une pluralité correspondant au nombre n d'enroulements, et les symboles des équations sont identifiés comme suit :

$\theta_m$ Valeur scalaire de la position angulaire du rotor

$\omega_m$ Valeur scalaire de la vitesse de rotation du rotor sur son axe supposé fixe dans un référentiel inertiel

$\bar{i}$ Vecteur des n courants d'enroulement

$v_j$, $i_j$ Tension et courant du *j-ème* enroulement (réseau à deux bornes) $j \in \{1..n\}$ ; ils sont rapportés à la convention de l'utilisateur avec le sens de référence du courant entrant dans la borne d'enroulement

$J$ Moment total d'inertie équivalent des masses en rotation ; il est rapporté à l'axe de rotation du rotor

$r_j$ Résistance du *j-ème* enroulement (C), $j \in \{1..n\}$

$Wco(\bar{i},\theta_m)$ Coénergie du champ électromagnétique dans l'espace global de la machine, exprimée comme une fonction d'état des courants d'enroulement et de la position angulaire du rotor

$v_j$, $i_j$ Tension et courant du *j-ème* enroulement (réseau à deux bornes) $j \in \{1..n\}$ ; ils sont rapportés à la convention de l'utilisateur avec le sens de référence du courant entrant dans la borne d'enroulement

$T_l$ Valeur scalaire du couple exercé par le système mécanique couplé à la machine électrique ; elle est rapportée à l'axe de rotation du rotor.

**11.** Procédé selon la revendication 9 ou 10, dans lequel la coénergie associée au champ électromagnétique au sein de la machine électrique (22) est procurée soit numériquement à partir de simulations, soit sous forme d'une fonction analytique, ou d'une forme discrétisée de celle-ci.

Fig. 1

Fig. 2

Fig. 3

Fig. 4A

Fig. 4B

Fig. 5

**EP 2 541 757 B1**

**Patent documents cited in the description**

- DE 4115338 A1

**Non-patent literature cited in the description**

- **COULOMB, J.** A methodology for the determination of global electromechanical quantities from a finite element analysis and its application to the evaluation of magnetic forces, torques and stiffness. *Magnetics, IEEE Transactions,* 1983, vol. 19 (6), 2514-2519
- **BROWN, JE ; KP KOVACS ; P VAS.** A method of including the effects of main flux path saturation in the generalized equations of ac machines. *IEEE Transactions on Power Apparatus and Systems,* 1983, 96-103
- **MIZIA, J. ; K. ADAMIAK ; A. R. EASTHAM ; G. E. DAWSON.** Finite element force calcula-tion: comparison of methods for electric machines. *Magnetics, IEEE Transactions,* 1988, vol. 24 (1), 447-450
- **WARZECHA, A.** The non-linear characteristics of ac machines based on the calculation of magnetic field co-energy. *COMPEL: The International Journal for Computation and Mathematics in Electrical and Electronic Engineering,* 1998, vol. 17 (3), 324-328
- **CHANG, L ; AR EASTHAM ; GE DAWSON.** Permanent magnet synchronous motor: finite element torquecalculations. *Industry Applications Society Annual Meeting, 1989., Conference Record of the 1989 IEEE,* 1989, 69-73
- **PROCA, AB ; A KEYHANI ; A EI-ANTABLY ; W LU ; M DAI.** Analytical model for permanent magnet motors with surface mounted magnets. *IEEE Transactions on Energy Conversion,* 2003, vol. 18 (3), 386-391
- **CHENG, M ; KT CHAU ; CC CHAN.** Static characteristics of a new doubly salient permanent magnet motor. *IEEE Transactions on Energy Conversion,* 2001, vol. 16 (1), 20-25
- **NEHL, TW ; FA FOUAD ; NA DEMERDASH.** Determination of saturated values of rotating machinery incremental and apparent inductances by an energy perturbation method. *IEEE Transactions on Power Apparatus and Systems,* 1982, 4441-4451
- **FERRERO, A. ; A. RACITI.** A digital method for the determination of the magnetic characteristic of variable reluctance motors. *Instrumentation and Measurement, IEEE Transactions,* 1990, vol. 39 (4), 604-608

- **FERRERO, A. ; A. RACITI ; C. URZI.** An indirect test method for the characterization of variable reluctance motors. *Instrumentation and Measurement, IEEE Transactions,* 1993, vol. 42 (6), 1020-1025
- **STATON, D. A. ; W. L. SOONG ; R. P. DEODHAR ; T. J. E. MILLER.** Unified theory of torque production in ac, dc and reluctance motors. *Industry Applications Society Annual Meeting, 1994., Conference Record of the 1994 IEEE,* 1994, vol. 1, 149-156
- **SHARMA, V. K. ; S. S. MURTHY ; B. SINGH.** An improved method for the determination of saturation characteristics of switched reluctance motors. *Instrumentation and Measurement, IEEE Transactions,* 1999, vol. 48 (5), 995-1000
- **VAGATI, A. ; M. PASTORELLI ; G. FRANCESCHINI.** High-performance control of synchronous reluctance motors. *Industry Applications, IEEE Transactions,* 1997, vol. 33 (4), 983-991
- **COSSAR, C ; M POPESCU ; TJE MILLER ; M MCGILP ; M OLARU.** A general magnetic-energy-based torque estimator: Validation via a permanent-magnet motor drive. *IEEE Transactions on Industry Applications,* 2008, vol. 44 (4), 1210-1217
- **AHO, TUOMO.** Electromagnetic Design of a Solid Steel Rotor Motor for Demanding Operation Environments. *PhD thesis,* 2007
- **JACKSON, JOHN DAVID.** Classical Electrodynamics. John Wiley & Sons, Inc, 1999
- **TAMM, IGOR E.** Fundamentals of the Theory of Electricity. MIR Publisher, 1979
- **GANTMAKHER, F. R.** The theory of matrices. Chelsea Pub. Co, 1960
- **VAS PETER ; BROWN J.** *Real-time monitoring of the electromagnetic torque of multi-phase machines,* 1985
- **STUMBERGER, G. ; B. STUMBERGER ; D. DOLINAR.** Identification of linear synchronous reluctance motor parameters. *Industry Applications, IEEE Transactions,* 2004, vol. 40 (5), 1317-1324

- **KUCUK, F. ; H. GOTO ; H. J. GUO ; O. ICHINOKU-RA.** Fourier series based characterization of switched reluctance motor using runtime data. *Electrical Machines (ICEM), 2010 XIX International Conference,* 2010